# EUROPEAN PATENT APPLICATION

(11) **EP 4 542 672 A2**
(43) Date of publication of application: **23.04.2025**
(21) Application number: 24181884.8
(22) Date of filing: 13.06.2024
(51) Int. Cl.: H01M 4/133, H01M 4/36, H01M 4/48, H01M 10/0562

(54) **ALL-SOLID SECONDARY BATTERY**

(30) Priority: 18.10.2023 KR 20230139875
(71) Applicant: SAMSUNG SDI CO., LTD., Giheung-gu Yongin-si, Gyeonggi-do 17084 (KR)
(72) Inventor: Son, Inhyuk, 17084 Gyeonggi-do (KR); Jo, Sungnim, 17084 Gyeonggi-do (KR); Shim, Kyueun, 17084 Gyeonggi-do (KR); Lim, Hyungsub, 17084 Gyeonggi-do (KR); Park, Taehyun, 17084 Gyeonggi-do (KR); Lee, Jieun, 17084 Gyeonggi-do (KR)
(74) Representative: Michalski Hüttermann & Partner Patentanwälte mbB

(57) **Abstract**

Disclosed is an all-solid secondary battery including a cathode layer, an anode layer, and a solid electrolyte layer between the cathode layer and the anode layer, the cathode layer including a cathode current collector and a cathode active material layer on one surface of the cathode current collector, the anode layer including an anode current collector and a first anode active material layer on one surface of the anode current collector, the first anode active material layer including a first anode active material and a second anode active material, and the first anode active material including a first composite anode active material, wherein the first composite anode active material includes a first metal oxide represented by MₐO_{b} (0<a≤3 and 0<b<4, wherein if a is 1, 2, or 3, b is not an integer) and a carbon-based material, the first metal oxide is provided within a matrix of the carbon-based material.

## Description

### CROSS-REFERENCE TO RELATED APPLICATION

The present application claims priority and the benefit of Korean Patent Application No. 10-2023-0139875, filed on October 18, 2023, in the Korean Intellectual Property Office, the entire content of which is incorporated by reference herein.

### BACKGROUND

### 1. Field

One or more embodiments of the present disclosure relate to an all-solid secondary battery.

### 2. Description of the Related Art

In line with recent developments in the industry, batteries having high energy density and stability are actively being developed. For example, lithium batteries are used for various purposes in information devices, communication devices, automobiles, and/or the like. In automobiles, safety is greatly emphasized as it directly affects human lives.

Lithium batteries employing liquid electrolytes may be more susceptible to fires and/or explosions due to short circuits. All-solid secondary batteries, which employ solid electrolytes instead of liquid electrolytes, have been proposed. Compared with liquid electrolytes, solid electrolytes may be less likely to cause fires.

Therefore, by employing solid electrolytes instead of liquid electrolytes, an all-solid secondary battery may have a reduced risk of fire and/or explosion. An all-solid battery may provide improved safety.

### SUMMARY

One or more embodiments of the present disclosure include an all-solid secondary battery which has suppressed or reduced volume changes during charging and discharging and has improved cycling performance by including a composite anode active material.

Additional aspects of embodiments will be set forth in part in the description which follows and, in part, will be apparent from the description, or may be learned by practice of the presented embodiments of the present disclosure.

According to one or more embodiments, an all-solid secondary battery includes:
a cathode layer; an anode layer; and a solid electrolyte layer between the cathode layer and the anode layer,
wherein the cathode layer includes a cathode current collector and a cathode active material layer on one surface of the cathode current collector,
wherein the anode layer includes an anode current collector and a first anode active material layer on one surface of the anode current collector,
wherein the first anode active material layer includes a first anode active material and a second anode active material,
wherein the first anode active material includes a first composite anode active material, the first composite anode active material includes a first metal oxide represented by MₐO_{b}, wherein 0<a≤3 and 0<b<4, and if a is 1, 2, or 3, b is not an integer, and a carbon-based material,
wherein the first metal oxide is within a matrix of the carbon-based material, and M is one or more metals selected from Groups 2 to 12, and Groups 14 to 16 of the Periodic Table of the Elements.

### BRIEF DESCRIPTION OF THE DRAWINGS

The above and other aspects and features of certain embodiments of the present disclosure will be more apparent from the following description taken in conjunction with the accompanying drawings, in which:
FIG. 1 is a cross-sectional view of an all-solid secondary battery according to embodiments;
FIG. 2 is a cross-sectional view of an all-solid secondary battery according to embodiments;
FIG. 3 is a cross-sectional view of an all-solid secondary battery according to embodiments;
FIG. 4 is a cross-sectional view of an all-solid secondary battery according to embodiments;
FIG. 5 is a cross-sectional view of an all-solid secondary battery according to embodiments;
FIG. 6 is a cross-sectional view of an all-solid secondary battery according to embodiments;
FIG. 7 is a cross-sectional view of an all-solid secondary battery according to embodiments;
FIG. 8 is a cross-sectional view of an all-solid secondary battery according to embodiments;
FIG. 9 is a cross-sectional view of an all-solid secondary battery according to embodiments;
FIG. 10 is a cross-sectional view of an all-solid secondary battery according to embodiments;
FIG. 11 is a cross-sectional view of an all-solid secondary battery according to embodiments; and
FIG. 12 is a cross-sectional view of an all-solid secondary battery according to embodiments.

### DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," when preceding a list of elements, modify the entire list of elements and do not modify the individual elements of the list.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the specification and the relevant art and should not be interpreted in an idealized sense or an overly formal sense unless expressly so defined herein.

Embodiments are described herein with reference to cross section illustrations that may be schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, in some embodiments, have rough and/or nonlinear features. Moreover, angles that are illustrated as being sharp may be rounded. Thus, the regions illustrated in the figures may be schematic in nature and their shapes are not intended to illustrate the precise shape of a region and are not intended to limit the scope of the present claims.

The subject matter of the present disclosure may, however, be embodied in many different forms and should not be construed as limited to the example embodiments set forth herein. Rather, these example embodiments are provided so that this disclosure will be thorough and complete, and will fully convey the scope of the present disclosure to those skilled in the art. In the drawings, like numbers refer to like elements throughout.

It will also be understood that when an element is referred to as being "on" or "over" another element, it can be directly on the other element or intervening elements may also be present. In contrast, when an element is referred to as being "directly on" or "directly over" another element, there are no intervening elements present.

It will be understood that, although the terms first, second, third, etc. may be used herein to describe various elements, components, regions, layers, and/or sections, these elements, components, regions, layers, and/or sections should not be limited by these terms. These terms are only used to distinguish one element, component, region, layer, or section, from another element, component, region, layer, or section. For example, a first element, component, region, layer, or section could be termed a second element, component, region, layer, or section, without departing from the spirit and scope of the present disclosure.

The terminology used herein is for the purpose of describing example embodiments only and is not intended to be limiting of the present disclosure. As used herein, the singular forms "a", "an" and "the" are intended to include the plural forms as well including "at least one", unless the context clearly indicates otherwise. The term "at least one" should not be interpreted as being limited to a singular form. As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, spatially relative terms, such as "lower", "bottom", or "below" and "upper", "top", or "above" may be used herein to conveniently describe one element or feature's relationship to another element or feature. It will be understood that spatially relative terms are intended to encompass different orientations of the device while the device is in use or operated, in addition to the orientation depicted in the drawings. For example, if the device in one of the figures is turned over, elements described as being on the "lower" or "bottom" side of other elements would then be oriented on "upper" or "top" sides of the other elements. Therefore, exemplary term "lower" can therefore, encompass both an orientation of "lower" and "upper". The device may be placed in other orientations (may be rotated by 90 degrees or in a different direction), and spatially relative terms used herein may be interpreted accordingly.

The term "Group" refers to a group in the Periodic Table of Elements of the Elements according to the 1-18 Group numbering system by the International Union of Pure and Applied Chemistry ("IUPAC"). As used herein, the term "weight average molecular weight" of a polymer may be measured using gel permeation chromatography (GPC), and is a relative value to a polystyrene standard sample.

The term "particle diameter" as used herein refers to an average particle diameter if the particle is spherical, and refers to an average major axis length if the particle is non-spherical. The particle diameter may be measured using, for example, a particle size analyzer (PSA). The term "particle diameter" as used herein refers to, for example, an average particle diameter. The term "average particle diameter" as used herein refers to, for example, a median particle diameter (D50).

D50 may refer to a particle size corresponding to a cumulative 50 vol% as calculated from the size of particles having the smallest particle size in a particle size distribution as measured by a laser diffraction method.

D90 may refer to a particle size corresponding to a cumulative 90 vol% as calculated from the size of particles having the smallest particle size in a particle size distribution as measured by a laser diffraction method.

D10 may refer to a particle size corresponding to a cumulative 10 vol% as calculated from the size of particles having the smallest particle size in a particle size distribution as measured by a laser diffraction method.

As used herein, the term "metal" refers to both metals and metalloids such as, for example, silicon and germanium, in an elemental or ionic state.

As used herein, the term "alloy" means a mixture of two or more metals.

As used herein, the term "electrode active material" refers to an electrode material capable of undergoing lithiation and delithiation.

As used herein, the term "cathode active material" refers to a cathode material capable of undergoing lithiation and delithiation.

As used herein, the term "anode active material" refers to an anode material capable of undergoing lithiation and delithiation.

As used herein, the terms "lithiation" and "to lithiate" refer to a process of adding lithium to an electrode active material.

As used herein, the terms "delithiation" and "to delithiate" refer to a process of removing lithium from an electrode active material.

As used herein, the terms "charging" and "to charge" refer to a process of providing electrochemical energy to a battery.

As used herein, the terms "discharging" and "to discharge" refer to a process of removing electrochemical energy from a battery.

As used herein, the terms "positive electrode" and "cathode" refer to an electrode at which electrochemical reduction and lithiation take place during a discharging process.

As used herein, the terms "negative electrode" and "anode" refer to an electrode at which electrochemical oxidation and delithiation take place during a discharging process.

While examples are shown and described herein, there may be alternatives, modifications, variations, improvements, and substantial equivalents of the examples disclosed herein, including those that are not presently foreseen or appreciated, that may arise from applicants and/or those skilled in the art. Accordingly, the appended claims as filed and as they may be amended are intended to embrace all such alternatives, modifications, variations, improvements and substantial equivalents.

Hereinbelow, an all-solid secondary battery according to embodiments will be described in greater detail.

### All-Solid Secondary Battery

An all-solid secondary battery according to embodiments may include a cathode layer; an anode layer; and a solid electrolyte layer between the cathode layer and the anode layer, wherein the cathode layer may include a cathode current collector and a cathode active material layer on one surface of the cathode current collector, the anode layer may include an anode current collector and a first anode active material layer on one surface of the anode current collector, the first anode active material layer may include a first anode active material and a second anode active material, the first anode active material may include a first composite anode active material, and the first composite anode active material may include a first metal oxide represented by MₐO_{b} (0<a≤3 and 0<b<4, wherein if a is 1, 2, or 3, b is not an integer); and a carbon-based material, wherein the first metal oxide may be within a matrix of the carbon-based material, and M may be one or more metals selected from Groups 2 to 12, and Groups 14 to 16 of the Periodic Table of the Elements.

The first anode active material layer may include a first anode active material, and the first composite anode active material may include a first metal oxide represented by MₐO_{b} (0<a≤3 and 0<b<4, wherein if a is 1, 2, or 3, b is not an integer); and a carbon-based material, wherein the first metal oxide may be provided within a matrix of the carbon-based material, and M may be one or more metals selected from Groups 2 to 12, and Groups 14 to 16 of the Periodic Table of the Elements.

Because the first composite anode active material includes the matrix of the carbon-based material, and the matrix of the carbon-based material has flexibility (e.g., relatively greater flexibility than the first metal oxide), volume changes of the first composite anode active material layer due to plating and/or dissolution of lithium during charging and discharging may be more easily accommodated. In some embodiments, volume changes of an all-solid secondary battery during charging and discharging may be reduced.

Because the first composite anode active material includes a first metal oxide disposed through dispersion within the matrix of the carbon-based material, irregular electrode reactions that may be caused by agglomeration of the first metal oxide may be suppressed or reduced. Deterioration of an all-solid secondary battery due to localized side reactions caused by irregular electrode reactions, and localized excessive plating of lithium, may be reduced. As a result, the cycling performance of the all-solid secondary battery may improve. For example, because during the preparation of the first composite anode active material, a matrix of a carbon-based material is formed as the carbon-based material grows from the surface of the second metal oxide, which is a precursor of the first metal oxide, and during the growth of the matrix of the carbon-based material, a structure in which the first metal oxide is dispersed within the matrix of the carbon-based material is created, agglomeration of particles of the first metal oxide within the matrix of the carbon-based material may be reduced or suppressed.

However, in a simple mixture of a carbon-based material and a metal oxide, uniform distribution of the metal oxide within a matrix of the carbon-based material may be difficult to achieve due to agglomeration of the carbon-based material and/or agglomeration of the metal oxide. In an all-solid secondary battery including a simple mixture of a carbon-based material and a metal oxide, irregular electrode reactions during charging and discharging may be difficult to suppress or reduce. As a result, the cycling performance of the all-solid secondary battery may deteriorate.

Because the first anode active material layer additionally includes a second anode active material distinguished from the first anode active material, the speed of electrode reactions may increase, and uniformity of electrode reactions may further improve. As a result, by further including the second anode active material, the cycling performance, for example, high-rate capability of an all-solid secondary battery may further improve. For example, within the first anode active material layer, the second anode active material may be more uniformly dispersed by the first anode active material.

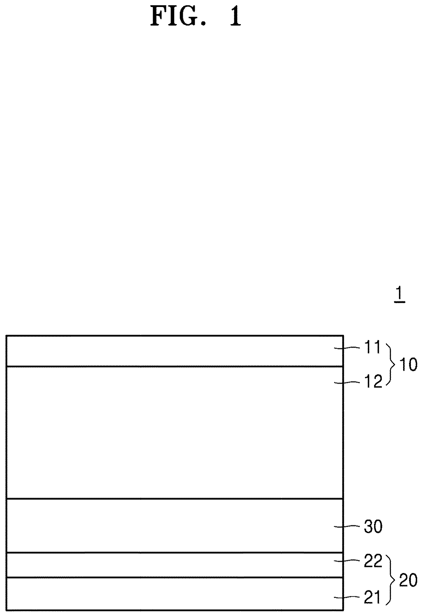

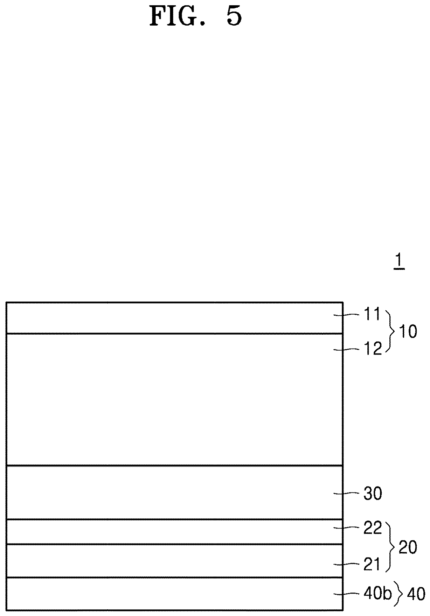

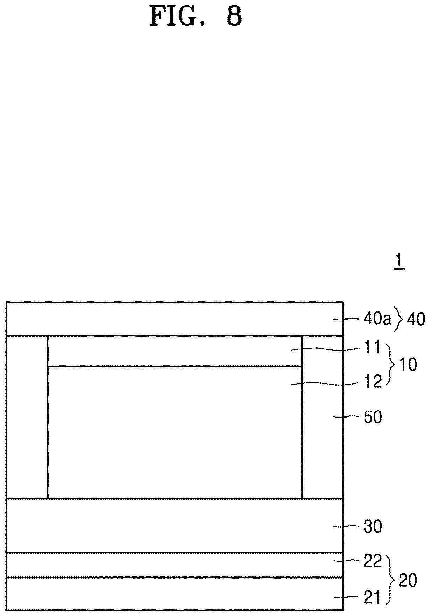

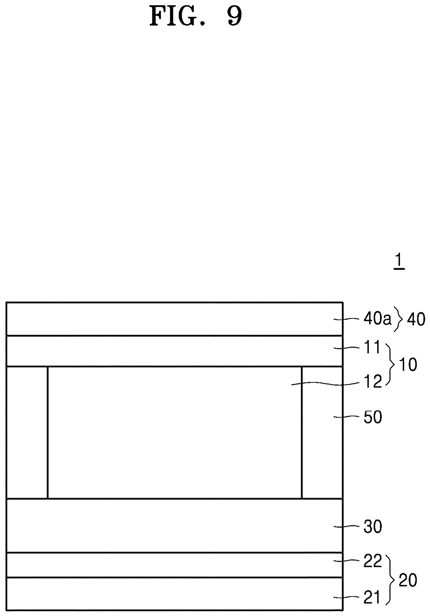

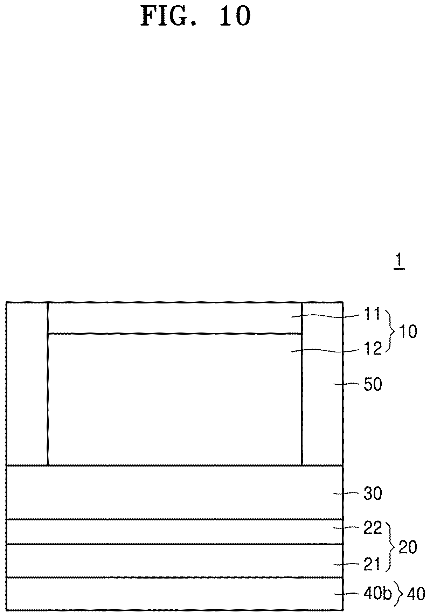

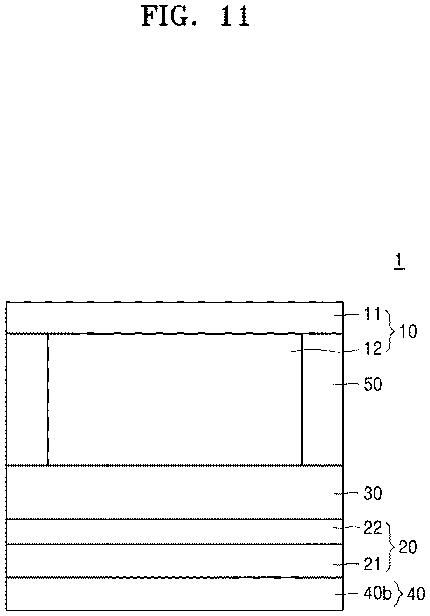

Referring to FIGS. 1 to 12, an all-solid secondary battery 1 may include a cathode layer 10; an anode layer 20; and a solid electrolyte layer 30 between the cathode layer 10 and the anode layer 20. The cathode layer 10 may include a cathode current collector 11 and a cathode active material layer 12 on one surface of the cathode current collector 11. The anode layer 20 may include an anode current collector 21 and a first anode active material layer 22 on one surface of the anode current collector 21. The first anode active material layer 22 may include a composite anode active material. The composite anode active material may include a first metal oxide represented by MₐO_{b} (0<a≤3 and 0<b<4, wherein if a is 1, 2, or 3, b is not an integer); and a carbon-based material. The first metal oxide may be provided within the matrix of the carbon-based material. M may be one or more metals selected from Groups 2 to 12, and Groups 14 to 16 of the Periodic Table of the Elements.

### Anode Layer

### Anode Layer: Anode Active Materials

Referring to FIGS. 1 to 12, the anode layer 20 may include a first anode active material layer 22. The first anode active material layer 22 may include, for example, a first anode active material and a second anode active material.

The first anode active material may be, for example, a first composite anode active material. The second anode active material may be distinct from the first anode active material.

The first composite anode active material may include a first metal oxide represented by MₐO_{b} (0<a≤3 and 0<b<4, wherein if a is 1, 2, or 3, b is not an integer); and a carbon-based material. The first metal oxide may be provided within the matrix of the carbon-based material. M may be one or more metals selected from Groups 2 to 12, and Groups 14 to 16 of the Periodic Table of the Elements.

The first metal oxide may include a metal, and the metal may be, for example, one or more selected from Si, Nb, Mg, Sc, Ti, Zr, V, W, Mn, Fe, Co, Pd, Cu, Ag, Zn, Sb, and Se. The first metal oxide may be, for example, one or more selected from SiO_{y} (0<y<2), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), Co₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2). Because this first metal oxide is provided within the matrix of the carbon-based material, uniform (e.g., substantially uniform) dispersion of the first metal oxide within the first active material layer may be achieved, and volume changes during charging and discharging of the first anode active material layer may be reduced or suppressed. The first metal oxide may be, for example, SiO_{y} (0<y<2).

The first composite anode active material may further include one or more second metal oxides, each represented by MₐO_{c} (0<a≤3 and 0<c≤4, wherein if a is 1, 2, or 3, c is an integer). M may be one or more metals selected from Groups 2 to 12, and Groups 14 to 16 of the Periodic Table of the Elements. For example, the second metal oxide may include the same metal as the first metal oxide. c/a, the ratio of c to a in the second metal oxide, may have a larger value than b/a, the ratio of b to a in the first metal oxide. For example, the relation c/a > b/a may be satisfied. The second metal oxide may be, for example, one or more selected from SiO₂, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide may be a reduction product of the second metal oxide. The first metal oxide may be obtained by complete or partial reduction of the second metal oxide. In some embodiments, the first metal oxide may have a lower oxygen content and a lower oxidation number of the metal, compared to the second metal oxide. For example, the composite anode active material may include SiO_{y} (0<y<2) as a first metal oxide, and SiO₂ as a second metal oxide.

In the first composite anode active material, a first metal oxide and a carbon-based material may be, for example, chemically bonded through a chemical bond (e.g., a covalent bond). In the first composite anode active material, the carbon atoms (C) of the carbon-based material and the first metal oxide may be chemically bonded through a C-O-M bond (e.g., a C-O-Si bond) via an oxygen atom. In the first composite anode active material, a carbon-based material and a first metal oxide may be chemically bound through a chemical bond to form a composite of the carbon-based material and the first metal oxide. In some embodiments, the first composite anode active material may be distinct from a simple physical mixtures of the carbon-based material and the first metal oxide.

The first composite anode active material may include, for example, at least one selected from a first metal oxide and a second metal oxide, and the at least one selected from the first metal oxide and the second metal oxide may have an average particle diameter of, for example, about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 40 nm, about 3 nm to about 40 nm, about 3 nm to about 30 nm, about 5 nm to about 25 nm, or about 5 nm to about 20 nm. With the first metal oxide and/or the second metal oxide having a particle diameter in the above ranges, the first metal oxide and/or the second metal oxide may be more uniformly distributed within the matrix of the carbon-based material of the first composite anode active material. In some embodiments, the first metal oxide and/or the second metal oxide may be uniformly (e.g., substantially uniformly) provided within the first anode active material layer. In some embodiments, uniform dispersion of the first metal oxide and/or the second metal oxide in the first anode active material layer may suppress or reduce side reactions during charging and discharging or further improve reversibility of electrode reactions. As a result, the cycling performance of an all-solid secondary battery may further improve.

In the first composite anode active material, average particle diameters of the first metal oxide and the second metal oxide may be measured by a measurement device that utilizes a laser diffraction technique and/or a dynamic light scattering technique. The average particle diameter may be measured by, for example, a laser scattering particle size distribution analyzer (for example, LA-920 manufactured by HORIBA) and is a median particle diameter (D50) at a cumulative percentage of 50 vol% from the smallest particle size.

In the first composite anode active material, the deviation in uniformity of at least one selected from the first metal oxide and the second metal oxide may be 3% or less, 2% or less, or 1% or less. The uniformity may be measured, for example, by X-ray photoelectron spectroscopy (XPS). In some embodiments, within the composite, the at least one selected from the first metal oxide and the second metal oxide may be uniformly (e.g., substantially uniformly) distributed at a deviation of 3% or less, 2% or less, or 1% or less.

The first composite anode active material may include, for example, at least one of a first metal oxide and a second metal oxide, and the content of the at least one selected from the first metal oxide and the second metal oxide may be, for example, about 10 wt% to about 90 wt%, about 10 wt% to about 80 wt%, about 10 wt% to about 70 wt%, about 10 wt% to about 60 wt%, about 10 wt% to about 50 wt%, or about 20 wt% to about 45 wt%, with respect to a total weight of the first composite anode active material. The content of the at least one selected from the first metal oxide and the second metal oxide may be about 10 wt% to about 55 wt%, about 10 wt% to about 50 wt%, about 20 wt% to about 45 wt%, or about 20 wt% to about 45 wt%, with respect to a total weight of the first composite anode active material. If the content of the at least one of the first metal oxide and the second metal oxide in the first composite anode active material is excessively small, it may be difficult to provide the beneficial effect of the anode active material. If the content of the at least one of the first metal oxide and the second metal oxide in the first composite anode active material excessively increases, the internal resistance of the first anode active material layer may excessively increase due to a significant decrease of the electronic conductivity of the first composite anode active material. As a result, the cycling performance of the all-solid secondary battery 1 may deteriorate.

In the first composite anode active material, the carbon-based material may include, for example, a carbon-based nanostructure. The carbon-based nanostructure may include, for example, a two-dimensional carbon-based nanostructure. The two-dimensional carbon-based nanostructure may be, for example, graphene. In some embodiments, the matrix of a carbon-based material matrix may be, for example, a graphene matrix. If the carbon-based material includes a two-dimensional carbon-based nanostructure, the first metal oxide and/or the second metal oxide may be easily provided on the surface of the two-dimensional carbon-based nanostructure, and lithium ions and/or electrons may easily travel along the surface of the two-dimensional nanostructure. For example, if the carbon-based material includes a two-dimensional carbon-based nanostructure, the reversibility of electrode reactions may improve. As a result, the cycling performance of the all-solid secondary battery may improve.

The first composite anode active material may include a carbon-based material, and the carbon-based material may have, for example, a branched structure. At least one metal oxide selected from the first metal oxide and the second metal oxide may be, for example, distributed within the branched structure of the carbon-based material. The branched structure of the carbon-based material may include, for example, a plurality of carbon-based material particles in contact (e.g., direct physical contact) with one another. If the carbon-based material has such a branched structure, various suitable conduction paths may be provided.

The first composite anode active material may include a carbon-based material, and the carbon-based material may be, for example, graphene. For example, the graphene may have a branched structure, and at least one metal oxide selected from the first metal oxide and the second metal oxide may be distributed within the branched structure of the graphene. The branched structure of the graphene may include, for example, a plurality of graphene particles in contact with one another. As the graphene has such a branched structure, various suitable conduction paths may be provided.

The first composite anode active material may include a carbon-based material, and the carbon-based material may have, for example, a spherical structure (e.g., a substantially spherical structure). At least one metal oxide selected from the first metal oxide and the second metal oxide may be, for example, distributed within the spherical structures of the carbon-based material. The spherical structure of the carbon-based material may have, for example, a size of about 50 nm to about 300 nm. The spherical structure of the carbon-based material may include a plurality of carbon-based material particles in contact (e.g., direct physical contact) with one another. With the carbon-based material having a spherical structure, the first composite anode active material may have a stable or secure structure.

The first composite anode active material may include a carbon-based material, and the carbon-based material may be, for example, graphene. For example, the graphene may have a spherical structure (e.g., a substantially spherical structure), and at least one metal oxide selected from the first metal oxide and the second metal oxide may be distributed within the spherical structure of graphene. The spherical structure of the graphene may have, for example, a size of about 50 nm to about 300 nm. The spherical structure of the graphene may include a plurality of graphene particles in contact (e.g., direct physical contact) with one another. With the graphene having a spherical structure, the first composite anode active material may have a stable or secure structure.

The carbon-based material included in the first composite anode active material may have, for example, a spiral structure in which a plurality of spherical structures (e.g., substantially spherical structures) are agglomerated. At least one metal oxide selected from the first metal oxide and the second metal oxide may be, for example, distributed within the spherical structures constituting the spiral structure of the carbon-based material. The spiral structure of the carbon-based material may have, for example, a size of about 500 nm to about 100 µm. With the carbon-based material having a spiral structure, the first composite anode active material may have a stable or secure structure.

The carbon-based material included in the first composite anode active material may be, for example, graphene. The graphene may have, for example, a spiral structure in which a plurality of spherical structures (e.g., substantially spherical structures) are connected, and at least one metal oxide selected from the first metal oxide and the second metal oxide may be distributed within the spherical structures constituting the spiral structure. The spiral structure of the graphene may have, for example, a size of about 500 nm to about 100 µm. With the graphene having a spherical structure, the first composite anode active material may have a stable or secure structure.

For example, the carbon-based material included in the first composite anode active material may have a cluster structure in which a plurality of spherical structures (e.g., substantially spherical structures) are agglomerated. At least one metal oxide selected from the first metal oxide and the second metal oxide may be, for example, distributed within the spherical structures constituting the cluster structure of the carbon-based material. The cluster structure of the carbon-based material may have, for example, a size of about 5 µm to about 1,000 µm. With the carbon-based material having a cluster structure, the first composite anode active material may have a stable or secure structure.

The carbon-based material included in the first composite anode active material may be, for example, graphene. The graphene may have, for example, a cluster structure in which a plurality of spherical structures (e.g., substantially spherical structures) are agglomerated, and at least one metal oxide selected from the first metal oxide and the second metal oxide may be distributed within the spherical structures constituting the cluster structure. The cluster structure of the graphene may have, for example, a size of about 5 µm to about 1,000 µm. With the graphene having a cluster structure, the first composite anode active material may have a stable or secure structure.

The first composite anode active material may have, for example, a crumpled faceted-ball structure, and at least one selected from the first metal oxide and the second metal oxide may be distributed inside the structure and/or on the surface of the structure. If the first composite anode active material has such a faceted-ball structure, the composite anode active material may be more easily provided on the surface of a solid electrolyte layer that includes irregular bumps.

The first composite anode active material may be or have a planar structure, and at least one selected from the first metal oxide and the second metal oxide may be distributed inside the structure and/or on the surface of the planar structure. If the first composite anode active material has such a two-dimensional planar structure, the composite anode active material may more easily cover the surface of a solid electrolyte layer that includes irregular bumps.

The carbon-based material included in the first composite anode active material may extend from the first metal oxide by a distance of 10 nm or less, and may include at least 1 to 20 carbon-based material layers. For example, as a plurality of carbon-based material layers are stacked, the carbon-based material having a total thickness of 12 nm or less may be provided on the first metal oxide. For example, the total thickness of the carbon-based material may be about 0.6 nm to about 12 nm.

The carbon-based material included in the first composite anode active material may be, for example, graphene. The graphene may extend from the first metal oxide by a distance of 10 nm or less, and may include at least 1 to 20 graphene layers. For example, as a plurality of graphene layers are stacked, graphene having a total thickness of 12 nm or less may be provided on the first metal oxide. For example, the total thickness of the graphene may be about 0.6 nm to about 12 nm.

The first anode active material and/or the second anode active material may each have, for example, a particulate form. The first anode active material and/or the second anode active material having a particulate form may have an average particle diameter of, for example, 4 µm or less, 3 µm or less, 2 µm or less, 1 µm or less, 500 nm or less, 300 nm or less, or 100 nm or less. For example, the first anode active material and/or second anode active material having a particulate form may have an average particle diameter of about 10 nm to about 4 µm, about 10 nm to about 3 µm, about 10 nm to about 2 µm, about 10 nm to about 1 µm, about 10 nm to about 500 nm, about 50 nm to about 300 nm, or about 50 nm to about 100 nm. If the first anode active material and/or the second anode active material have an average particle diameter within the above ranges, reversible absorption and/or desorption of lithium during charging and discharging may be further facilitated or improved. The average particle diameter of the first anode active material and/or the second anode active material may be, for example, a median diameter (D50) measured by using a laser particle size distribution analyzer.

The first anode active material layer 22 may include a second anode active material. The second anode active material layer may include, for example, a carbon-based anode active material and at least one selected from metal-based anode active materials.

The carbon-based anode active material may include, for example, amorphous carbon, crystalline carbon, porous carbon, or a combination thereof.

The carbon-based anode active material may be, for example, an amorphous carbon. Examples of the amorphous carbon may include carbon black (CB), acetylene black (AB), furnace black (FB), Ketjen black (KB), graphene, and the like; however, the carbon-based anode active material is not necessarily limited to the aforementioned examples and may be any suitable material categorized as amorphous carbon in the art. Amorphous carbon may be carbon having no crystalline structure or an extremely low degree of crystallinity and as such, may be distinguished from crystalline carbon or graphitic carbon.

The carbon-based anode active material may be porous carbon, for example. For example, pores included in the porous carbon may have a pore volume of about 0.1 cc/g to about 10.0 cc/g, about 0.5 cc/g to about 5 cc/g, or about 0.1 cc/g to about 1 cc/g. For example, pores included in the porous carbon may have an average pore diameter of about 1 nm to about 50 nm, about 1 nm to about 30 nm, or about 1 nm to about 10 nm. The BET specific surface of the porous carbon may be, for example, about 100 m²/g to about 3,000 m²/g. A BET specific surface area, a pore diameter, a pore volume, and an average pore diameter, as described herein, may be obtained using, for example, a nitrogen adsorption method such as ASTM D6556, ASTM D4567, and/or ISO 9277:2022.

The metal-based anode active material may include at least one selected from gold (Au), platinum (Pt), palladium (Pd), silicon (Si), silver (Ag), aluminum (Al), bismuth (Bi), tin (Sn), and zinc (Zn), but without being necessarily limited to the aforementioned materials, may utilize any suitable metal-based anode active material available in the art that can form an alloy and/or a compound with lithium. For example, nickel (Ni) does not form an alloy with lithium and is therefore not regarded as a metal anode active material.

Among these anode active materials, the second anode active material may include a single anode active material, or may include a mixture of different types (or kinds) of anode active materials. For example, the second anode active material may include amorphous carbon alone, or may include one or more selected from gold (Au), platinum (Pt), palladium (Pd), silicon (Si), silver (Ag), aluminum (Al), bismuth (Bi), tin (Sn), and zinc (Zn). In some embodiments, the second anode active material may include a mixture of amorphous carbon with one or more selected from gold (Au), platinum (Pt), palladium (Pd), silicon (Si), silver (Ag), aluminum (Al), bismuth (Bi), tin (Sn), and zinc (Zn). A mixing ratio of amorphous carbon to the metal(s) described herein, such as gold (Au), in such a mixture, may be about 99:1 to about 1:99, about 10:1 to about 1:2, about 5:1 to about 1:1, or about 4:1 to about 2:1 in weight ratio, but without being necessarily limited thereto, the mixing ratio may be selected according to a desired or required feature of the all-solid secondary battery 1. If the anode active material has the above composition, the cycling performance of the all-solid secondary battery 1 may further improve.

The second anode active material may include, for example, a mixture of first particles and second particles, the first particles being composed of amorphous carbon and the second particles being composed of a metal and/or a metalloid. Examples of the metal and/or metalloid may include gold (Au), platinum (Pt), palladium (Pd), silicon (Si), silver (Ag), aluminum (Al), bismuth (Bi), tin (Sn), zinc (Zn), and the like. In other embodiments, the metalloid may be a semiconductor. The content of the second particles may be about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to the total weight of the mixture. If the content of the second particles is within the above ranges, the cycling performance of the all-solid secondary battery 1 may further improve.

In some embodiments, the second anode active material may include a second composite anode active material. The second composite anode active material may include, for example, a carbon-based support and a metal-based anode active material supported on the carbon-based support. If the second composite anode active material has the above structure, it may be possible to prevent or reduce uneven distribution of the metal-based anode active material within the first anode active material layer and achieve uniform (e.g., substantially uniform) distribution of the metal-based anode active material. As a result, the cycling performance of the all-solid secondary battery 1 including the first anode active material layer 22 may further improve.

Examples of the metal-based anode active material supported on the carbon-based support may include a metal, a metal oxide, a metal-metal oxide composite, or a combination thereof. The metal may include, for example, gold (Au), platinum (Pt), palladium (Pd), silicon (Si), silver (Ag), bismuth (Bi), tin (Sn), tellurium (Te), zinc (Zn), and/or the like. The metal oxide may include, for example, gold (Au) oxide, platinum (Pt) oxide, palladium (Pd) oxide, silicon (Si) oxide, silver (Ag) oxide, bismuth (Bi) oxide, tin (Sn) oxide, tellurium (Te) oxide, zinc (Zn) oxide, and/or the like. For example, the metal oxide may include AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. Examples of the metal-metal oxide composite may include a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination thereof.

The carbon-based support may be, for example, an amorphous carbon. The amorphous carbon may include, for example, carbon black (CB), acetylene black (AB), furnace black (FB), Ketjen black (KB), activated carbon, and/or the like, but without being necessarily limited to the aforementioned examples, may utilize any suitable material categorized as amorphous carbon in the art. Amorphous carbon may be carbon having no crystalline structure or an extremely low degree of crystallinity and as such, may be distinguished from crystalline carbon or graphitic carbon. The carbon-based material may be, for example, a carbon-based anode active material.

The second composite anode active material may have, for example, a particulate form. The second composite anode active material having a particulate form may have a particle diameter of, for example, about 10 nm to about 4 µm, about 10 nm to about 1 µm, about 10 nm to about 500 nm, about 10 nm to about 200 nm, or about 10 nm to about 100 nm. If the second composite anode active material has a particle diameter within the above ranges, reversible absorption and/or desorption of lithium during charging and discharging may be further facilitated or improved. The metal-based anode active material supported on the support may have, for example, a particulate form. The metal-based anode active material may have a particle diameter of, for example, about 1 nm to about 200 nm, about 1 nm to about 150 nm, about 5 nm to about 100 nm, or about 10 nm to about 50 nm. The carbon-based support may have, for example, a particulate form. For example, the carbon-based support may have a particle diameter of from about 10 nm to about 2 µm, about 10 nm to about 1 µm, about 10 nm to about 500 nm, about 10 nm to about 200 nm, or about 10 nm to about 100 nm. With the carbon-based support having a particle diameter in the above ranges, a more uniform distribution within the first anode active material layer may be achieved. For example, the carbon-based support may be nanoparticles having a particle diameter of 500 nm or less. The particle diameter of the second composite anode active material, the particle diameter of the metal-based anode active material, and the particle diameter of the carbon-based support may be, for example, an average particle diameter. The average particle diameter may be, for example, a median particle diameter (D50) as measured by a laser-type particle size distribution analyzer. In some embodiments, the average particle diameter may be automatically determined using a software, and/or manually determined using a manual, from an electron microscope image.

### Anode Layer: Binder

The first anode active material layer 22 may further include a binder. The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any suitable material available as a binder in the art. The binder may be composed of a single type of binder, or a plurality of binders of different types (or kinds). The binder may include, for example, a fluorinated binder.

Because the first anode active material layer 22 includes a binder, the first anode active material layer 22 may be stabilized on the anode current collector 21. Further, crack formation in the first anode active material layer 22 may be suppressed or reduced, despite volume changes and/or displacement of the first anode active material layer 22 during charging and discharging processes. For example, if the first anode active material layer 22 does not contain any binder, the first anode active material layer 22 may be easily delaminated from the anode current collector 21. The likelihood of a short circuit occurring may increase due to the anode current collector 21 and the solid electrolyte layer 30 coming in contact (e.g., direct physical contact) with each other at an area where the anode current collector 21 is exposed as a result of delamination of the first anode active material layer 22 from the anode current collector 21. For example, the first anode active material layer 22 may be prepared by applying and drying a slurry having dispersed therein materials forming the first anode active material layer 22 on the anode current collector 21. By including a binder in the first anode active material layer 22, stable dispersion of the anode active materials within the slurry may be achieved. For example, if applying the slurry onto the anode current collector 21 by a screen-printing method, it may be possible to prevent or reduce clogging of the screen (for example, clogging by agglomerates of the anode active material).

### Anode Layer: Other Additives

The first anode active material layer 22 may further include other additives used in an all-solid secondary battery, such as a filler, a coating agent, a dispersing agent, an ionically conductive aid, and/or the like.

### Anode Layer: First Anode Active Material Layer

The initial charge capacity B of a first anode active material layer 22 may be smaller than the initial charge capacity A of a cathode active material layer 12. Initial charge capacity B of the first anode active material layer 22 may be, for example, less than 100%, 99% or less, 90% or less, 80% or less, 70% or less, 60% or less, 50% or less, 40% or less, 30% or less, 20% or less, or 10% or less, with respect to initial charge capacity A of the cathode active material layer 12.

The ratio B/A of the initial charge capacity B of the first anode active material layer 22 to the initial charge capacity A of the cathode active material layer 12 may be, for example, about 0.01 to about 0.99, about 0.01 to about 0.9, about 0.01 to about 0.01. about 0.8, about 0.01 to about 0.7, about 0.01 to about 0.6, about 0.01 to about 0.5, about 0.01 to about 0.4, about 0.01 to about 0.3, about 0.01 to about 0.2 or about 0.01 to about 0.1. The initial charge capacity of the cathode active material layer 12 may be determined by charging to a maximum charging voltage vs. Li/Li⁺ from a first open circuit voltage. The initial charge capacity of the first anode active material layer 22 may be determined by charging to 0.01 V vs. Li/Li⁺ from a second open circuit voltage. The maximum charging voltage may be determined by the type (or kind) of the cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S and/or a Li₂S composite may be 2.5 V vs. Li/Li⁺. For example, the maximum charging voltage of Li₂S and/or a Li₂S composite may be 3.0 V vs. Li/Li⁺.

The initial charge capacity (mAh) of the cathode active material layer 12 may be obtained by multiplying the charge specific capacity (mAh/g) of the cathode active material layer 12 by the mass (g) of a cathode active material in the cathode active material layer 12. If a plurality of types (or kinds) of cathode active materials are used, the product of charge specific density × mass may be calculated for each cathode active material, and the sum of these products may be defined as an initial charge capacity of the cathode active material layer 12. The initial charge capacity of the first anode active material layer 22 may also be calculated in the same manner. The initial charge capacity of the first anode active material layer 22 may be obtained by multiplying the charge specific density (mAh/g) of an anode active material by the mass of the anode active material in the first anode active material layer 22. If a plurality of types (or kinds) of anode active materials are used, the product of charge specific density × mass may be calculated for each anode active material, and the sum of these products may be defined as an initial charge capacity of the first anode active material layer 22. The charge specific density of each of the cathode active material and the anode active material may be measured using an all-solid half-cell that uses lithium metal as a counter electrode. The initial charge capacity of each of the cathode active material layer 12 and the first anode active material layer 22 may be directly measured by using an all-solid half-cell at a constant current density, for example, at 0.1 mA/cm². For the cathode, this measurement may be made for an operating voltage from a 1^{st} open circuit voltage (OCV) to a maximum charge voltage, for example, 3.0 V (vs. Li/Li⁺). For the anode, this measurement may be made for an operating voltage from a second OCV to 0.01 V with respect to the anode, for example, lithium metal. For example, the all-solid half-cell having the cathode active material layer may be charged from the 1^{st} OCV to 3.0 V with a constant current of 0.1 mA/cm², and the all-solid half-cell having the first anode active material layer may be charged from the 2nd OCV to 0.01 V with a constant current of 0.1 mA/cm². For example, the current density during the constant current charging may be 0.2 mA/cm² or 0.5 mA/cm². The all-solid half-cell having the cathode active material layer may be charged from the first OCV to, for example, 2.5 V, 2.0 V, 3.5 V, or 4.0 V. The maximum charge voltage of the cathode active material layer may be determined according to the maximum voltage of a cell that satisfies the safety conditions described in JISC8712:2015 by Japanese Standards Association.

If the initial charge capacity of the first anode active material layer 22 is excessively small, the thickness of the first anode active material layer 22 becomes extremely small, and as a result, lithium dendrites formed between the first anode active material layer 22 and the anode current collector 21 during repeated charging and discharging processes may cause disintegration of the first anode active material layer 22, making it difficult to achieve improved cycling performance of the all-solid secondary battery 1. If the charge capacity of the first anode active material layer 22 is excessively large, the energy density of the all-solid secondary battery 1 may decrease, and the internal resistance of the all-solid secondary battery 1 by the first anode active material layer 22 may increase, making it difficult to achieve improved cycling performance of the all-solid secondary battery 1.

For example, a thickness of the first anode active material layer 22 may be 50% or less, 40% or less, 30% or less, 20% or less, or 10% or less, with respect to a thickness of the cathode active material layer 12. For example, a thickness of the first anode active material layer 22 may be about 1% to about 50%, about 1% to about 40%, about 1% to about 30%, about 1% to about 20%, or about 1% to about 10%, with respect to a thickness of the cathode active material layer 12. The first anode active material layer 22 may have a thickness of, for example, about 1 µm to about 50 µm, about 2 µm to about 40 µm, about 3 µm to about 30 µm, about 4 µm to about 20 µm, or about 5 µm to about 20 µm. If the first anode active material layer 22 is excessively thin, lithium dendrites formed between the first anode active material layer 22 and the anode current collector 21 may cause disintegration of the first anode active material layer 22, making it difficult to achieve improved cycling performance of the all-solid secondary battery 1. If the thickness of the first anode active material layer 22 excessively increases, the energy density of the all-solid secondary battery 1 may decrease, and the internal resistance of the all-solid secondary battery 1 by the first anode active material layer 22 may increase, thus making it difficult to achieve improved cycling performance of the all-solid secondary battery 1. With decreasing thickness of the first anode active material layer 22, for example, the initial charge capacity of the first anode active material layer 22 may also decrease.

### Anode: Second Anode Active Material Layer

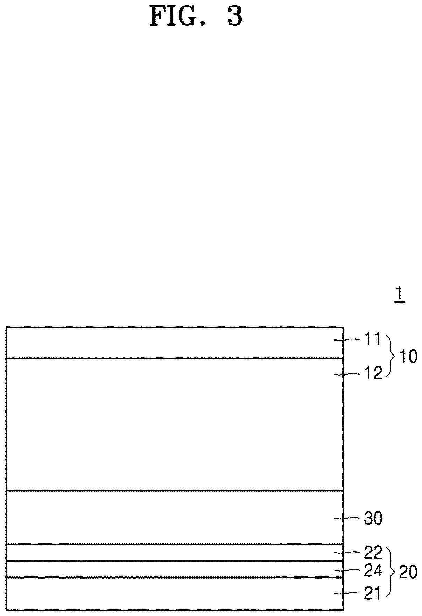

Referring to FIG. 3, the all-solid secondary battery 1 may further include, after charging, for example, a second anode active material layer 24 that is between the anode current collector 21 and the first anode active material layer 22. The second anode active material layer 24 may be a metal layer including lithium and/or a lithium alloy. The metal layer may include lithium and/or a lithium alloy. In some embodiments, the second anode active material layer 24, as it is a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, may be any suitable material available as a lithium alloy in the art. The second anode active material layer 24 may be composed of one of such alloys, and/or lithium, and/or may be composed of various suitable types (or kinds) of alloys. The second anode active material layer 24 may be, for example, a plated layer. For example, the second anode active material layer 24 may be plated between the first anode active material layer 22 and the anode current collector 21 during a charging process of the all-solid secondary battery 1.

A thickness of the second anode active material layer 24 is not limited, but may be, for example, about 1 µm to about 200 µm, about 1 µm to about 150 µm, about 1 µm to about 100 µm, about 1 µm to about 50 µm, about 1 µm to about 30 µm, about 1 µm to about 22 µm, or about 1 µm to about 10 µm. If the thickness of the second anode active material layer 24 is excessively small, the second anode active material layer 24 may fail to suitably or sufficiently function as a lithium reservoir. If the thickness of the second anode active material layer 24 is excessively large, the mass and volume of the all-solid secondary battery 1 may increase, and the cycling performance of the all-solid secondary battery 1 may be more likely to deteriorate or substantially deteriorate.

For example, a thickness of the second anode active material layer 24 may be less than a thickness of the first anode active material layer 22. The thickness of the second anode active material layer 24 may be, for example, 70% or less, 60% or less, 50% or less, 40% or less, or 30% or less, with respect to the thickness of the first anode active material layer 22. The thickness of the second anode active material layer 24 may be, for example, about 1% to about 70%, about 1% to about 60%, about 1% to about 50%, about 1% to about 40%, or about 1% to about 30%, with respect to a thickness of the first anode active material layer 22. As the thickness of the second anode active material layer 24 becomes smaller relative to the thickness of the first anode active material layer 22, volume changes of an all-solid secondary battery during charging and discharging may be reduced or suppressed. As a result, deterioration of the all-solid secondary battery due to volume changes may be reduced or suppressed.

In some embodiments, in the all-solid secondary battery 1, the second anode active material layer 24 may be, for example, between the anode current collector 21 and the first anode active material layer 22 prior to assembly of the all-solid secondary battery 1. In an embodiment in which the second anode active material layer 24 is to be between the anode current collector 21 and the first anode active material layer 22 prior to assembly of the all-solid secondary battery 1, the second anode active material layer 24, as it is a metal layer containing lithium, may act as a lithium reservoir. For example, a lithium foil may be between the anode current collector 21 and the first anode active material layer 22 prior to assembly of the all-solid secondary battery 1.

In an embodiment in which the second anode active material layer 24 is to be plated by charging after assembly of the all-solid secondary battery 1, because the second anode active material layer 24 is not included at the time of assembly of the all-solid secondary battery 1, the all-solid secondary battery 1 may have increased energy density. If charging the all-solid secondary battery 1, the charging may be performed exceeding the charge capacity of the first anode active material layer 22. The first anode active material layer 22 may be then overcharged. At the beginning of the charging, lithium may be absorbed into the first anode active material layer 22. The anode active material included in the first anode active material layer 22 may form an alloy and/or a compound with lithium ions moved from the cathode 10. If the charging is performed exceeding the capacity of the first anode active material layer 22, lithium may be precipitated, for example, on the back surface of the first anode active material layer 22, for example, between the anode current collector 21 and the first anode active material layer 22, and the precipitated lithium then may form a metal layer that corresponds to the second anode active material layer 24. The second anode active material layer 24 may be a metal layer mainly composed of lithium (e.g., metal lithium). For example, the second anode active material layer 24 may consist essentially of lithium (e.g., lithium metal) such that any other materials in the second anode active material layer 24 are present, if at all, only as an incidental impurity. In some embodiments, the second anode active material layer 24 consists of lithium (e.g., lithium metal). This result may be attributed to the fact that the anode active material included in the first anode active material layer 22 includes a material that forms an alloy and/or compound with lithium. During discharge, lithium in metal layers, for example, in the first anode active material layer 22 and the second anode active material layer 24, may be ionized and migrate toward the cathode 10. In some embodiments, it is possible to use lithium as an anode active material in the all-solid secondary battery 1. In some embodiments, the first anode active material layer 22 covers the second anode active material layer 24, and as such, may function as a protective layer for the metal layer, for example, the second anode active material layer 24, while inhibiting or reducing plating and growth of lithium dendrites. In some embodiments, a short circuit and capacity fading in the all-solid secondary battery 1 may be suppressed or reduced, and consequently, the cycling performance of the all-solid secondary battery 1 may improve. In some embodiments, in an embodiment in which the second anode active material layer 24 is to be provided by charging after assembly of the all-solid secondary battery 1, the anode 20, for example, the anode current collector 21, the first anode active material layer 22, and the area therebetween, may be a Li-free region free of Li while the all-solid secondary battery 1 is in the initial state or a fully discharged state. For example, the Li-free region may be substantially free of Li such that if Li is present, if at all, in the Li-free region it is present only as an incidental impurity. In some embodiments, the Li-free region is completely free of Li.

### Anode: Anode Current Collector

The anode current collector 21 may be formed of a material that does not react with lithium, for example, does not form an alloy or a compound with lithium. Examples of the material forming the anode current collector 21 may include copper (Cu), stainless steel, titanium (Ti), iron (Fe), cobalt (Co), nickel (Ni), and the like. However, the material forming the anode current collector 21 is not necessarily limited to the aforementioned materials but may be any suitable material available as an electrode current collector in the art. The anode current collector 21 may be formed of one type (or kind) of the aforementioned metals, an alloy of two or more types (or kinds) of metals thereof, and/or a covering material. The anode current collector 21 may be, for example, a plate type and/or a foil type.

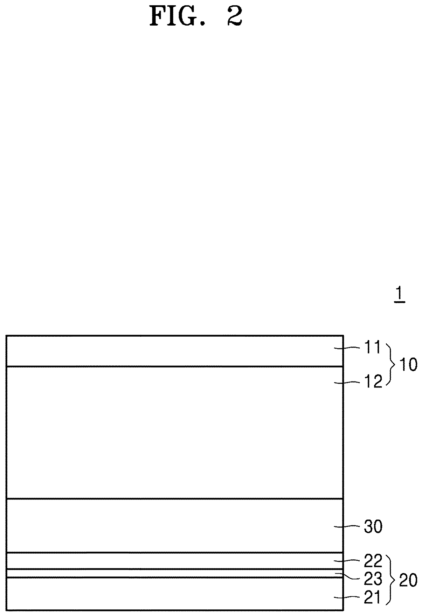

Referring to FIG. 2, the all-solid secondary battery 1 may further include a thin film 23 that contains an element capable of forming an alloy with lithium, on one surface of the anode current collector 21. The thin film 23 may be between the anode current collector 21 and the first anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but without being limited thereto, any suitable element available in the art that is capable of forming an alloy with lithium may be utilized. The thin film 23 may be composed of one of the aforementioned metals or may be composed of an alloy of various suitable kinds of metals. If the thin film 23 is on the anode current collector 21, the form of the second anode active material layer 24 being plated between the thin film 23 and the first anode active material layer 22 may have a further flattened form, and the cycling performance of the all-solid secondary battery 1 may further improve.

For example, the thin film 23 may have a thickness of about 1 nm to about 800 nm, about 10 nm to about 700 nm, about 50 nm to about 600 nm, or about 100 nm to about 500 nm. If the thickness of the thin film 23 is less than 1 nm, it may be difficult to achieve functions attributable to the thin film 23. If the thickness of the thin film 23 is excessively large, the thin film 23 may absorb lithium by itself, causing the amount of lithium being plated at the anode to decrease, and as a result, the all-solid secondary battery 1 may have decreased energy density and deteriorated or reduced cycling performance. The thin film 23 may be on the anode current collectors 21 by a vacuum deposition method, a sputtering method, a plating method, and/or the like, but is not limited to the aforementioned methods and may be any suitable method available in the art that is capable of forming the thin film 23.

In some embodiments, the anode current collector 21 may include a base film, and a metal layer on one surface or opposite surfaces of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. The polymer may be an insulating polymer (e.g., an electrically insulating polymer). If the base film includes an insulating thermoplastic polymer (e.g., an electrically insulating thermoplastic polymer), in the event of a short circuit, the base film is softened or liquefied, blocking or reducing the operation of the battery, to thereby prevent or reduce a rapid increase in electrical current. For example, the metal layer may include copper (Cu), stainless steel, titanium (Ti), iron (Fe), cobalt (Co), nickel (Ni), and/or an alloy thereof. The anode current collector 21 may further include a metal chip and/or a lead-tab. For detailed descriptions of the base film, the metal layer, the metal chip, and the lead-tab of the anode current collector 21, refer to the cathode current collector 11 described above. If the anode current collector 21 has the above structure, the weight of the anode may be reduced, and as a result, energy density of the anode and the lithium battery may improve.

### Anode Layer: First Inactive Member

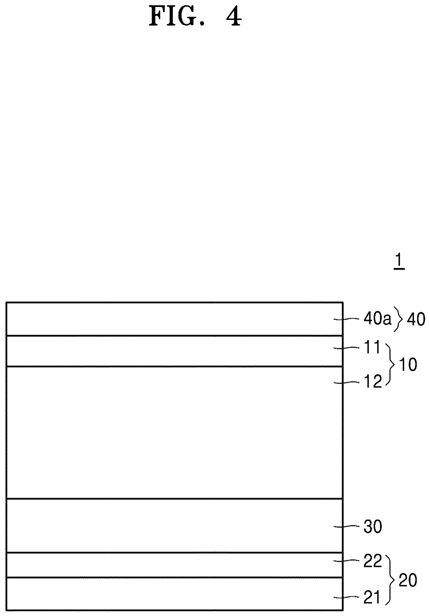

Referring to FIGS. 4 and 5 and FIGS. 8 to 12, the all-solid secondary battery 1 may further include a first inactive member 40, 40a, 40b on at least one of the opposite surface to the one surface of the anode current collector 21 and the opposite surface to the one surface of the cathode current collector 11.

The first inactive member 40, 40a, 40b may not contain an electrode active material. The first inactive member 40, 40a, 40b may be, for example, an insulating member (e.g., an electrically insulating member).

The first inactive member 40, 40a, 40b may have a conductivity (e.g., electrical conductivity) by additionally containing a conductive material (e.g., an electrically conductive material). The first inactive member 40, 40a, 40b may be, for example, a flame-retardant inactive member by additionally containing a flame-retardant material.

The first inactive member 40, 40a, 40b may be, for example, an elastic member. The first inactive member 40, 40a, 40b may be, for example, a porous elastic member. The first inactive member 40, 40a, 40b may be, for example, an elastic member that has at least one of porosity, conductivity (e.g., electrical conductivity), and flame retardancy.

The first inactive member 40, 40a, 40b may impart a cushioning function to an all-solid secondary battery 1. The first inactive member 40, 40a, 40b may provide, for example, stress relaxation and a restoring force. The first inactive member 40, 40a, 40b may effectively accommodate volume changes of an all-solid secondary battery 1 and apply uniform (e.g., substantially uniform) pressure to the all-solid secondary battery 1.

For example, the first inactive member 40, 40a, 40b may have a lower elastic modulus than the anode current collector 21. If the first inactive member 40, 40a, 40b has a lower elastic modulus than the anode current collector 21, volume changes of the anode layer 20 during charging and discharging of the all-solid secondary battery 1 may be more effectively accommodated. The first inactive member 40, 40a, 40b may effectively buffer an internal stress caused by a volume change of the all-solid secondary battery 1 during charging and discharging of the all-solid secondary battery 1, and may thus achieve improved cycling performance of the all-solid secondary battery 1.

The first inactive member 40, 40a, 40b may be on the anode layer 20 of the all-solid secondary battery 1. Because the anode layer 20 undergoes larger volume changes than the cathode layer 10 and the solid electrolyte layer 30 during charging and discharging of the all-solid secondary battery 1, by placing the first inactive member 40, 40a, 40b adjacent to the anode layer 20, volume changes of the anode layer 20 may be more effectively accommodated. For example, as the first inactive member 40, 40a, 40b applies uniform (e.g., substantially uniform) pressure to the anode layer 50, uniform (e.g., substantially uniform) plating of lithium metal may be induced at the anode layer 50. In some embodiments, defect formation in the all-solid secondary battery 1 due to non-uniform plating of lithium metal may be more effectively prevented or reduced. The first inactive member 40, 40a, 40b may be a porous multilayer member or a porous cushioning layer.

The first inactive member 40, 40a, 40b may include a polymer material, a rubber material, or a combination thereof. By including a polymer material, a rubber material, or a combination thereof, the first inactive member 40, 40a, 40b may have or provide a stress relaxation and restoring force. The polymer material may include, for example, a polyurethane-based polymer, a polyacrylic-based polymer, a polystyrene-based polymer, a polyester-based polymer, a polyamide-based polymer, a polyolefin-based polymer, or a combination thereof. The polymer material may be, for example, a polymer resin. The polymer material may be, for example, an adhesive resin. The rubber material may include, for example, natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, chloroprene rubber (CR), halogenated isoprene rubber, halogenated isobutylene copolymers, butyl rubber (IIR), halogenated isobutylene-p-methyl styrene rubber, or a combination thereof. The polyurethane-based polymer may include, for example, a polyester-based polyurethane, a polyether-based polyurethane, or a combination thereof. The polyacrylic-based polymer may include, for example, polyacrylate, polymethyl acrylate, polymethacrylate, polymethyl methacrylate, or a combination thereof. The polystyrene-based polymer may include, for example, a styrene-ethylene-butylene copolymer (SEB), a styrene-butadiene-styrene copolymer (SBS), hydrogenated SBS (styrene-ethylene-butylene-styrene copolymers (SEBS)), a styrene-isoprene-styrene copolymer (SIS), hydrogenated SIS (styrene-ethylene-propylene-styrene copolymers (SEPS)), a styrene-isobutylene-styrene copolymer (SIBS), styrene-butadiene-styrene-butadiene (SBSB), styrene-butadiene-styrene-butadiene-styrene (SBSBS), polystyrene (PS), an acrylonitrile styrene copolymer (AS), an acrylonitrile butadiene-styrene copolymer (ABS), or a combination thereof. The polyester-based polymer may include, for example, polyethylene terephthalate, polybutylene terephthalate, or a combination thereof. The polyamide-based polymer may include, for example, Polyamide 6, Polyamide 11, Polyamide 12, Polyamide 66, Polyamide 610, or a combination thereof. The polyolefin-based polymer may include, for example, polyethylene, polypropylene, an ethylene propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, 1-butene-4-methyl-pentene, an ethylene/methacrylic acid copolymer, an ethylene-methacrylic acid ethyl copolymer, an ethylene methacrylic acid butyl copolymer, an ethylene-methyl acrylate copolymer, an ethylene-ethyl acrylate copolymer, an ethylene-butyl acrylate copolymer, a propylene-methacrylic acid copolymer, a propylene-methacrylic acid methyl copolymer, a propylene-methacrylic acid ethyl copolymer, a propylene-methacrylic acid butyl copolymer, a propylene-methylacrylate copolymer, a propylene-acrylic acid ethyl copolymer, a propylene-butylacrylate copolymer, an ethylene-vinyl acetate polymer (EVA), a polyolefin of a propylene vinyl acetate copolymer, or a combination thereof.

The first inactive member 40, 40a, 40b may include, for example, a porous foam, a porous sponge, or a combination thereof. The first inactive member 40, 40a, 40b may include, for example, a porous foam sheet, a porous sponge sheet, or a combination thereof. The first inactive member 40, 40a, 40, by having such a form, may provide porosity and cushioning function at the same time. The porous foam may include, for example, closed cells, open cells, or a combination thereof. The porous sponge may include, for example, closed cells, open cells, or a combination thereof. The closed cells refer to closed pores, which are cells or pores that are disconnected from the surrounding atmosphere. The open cells refer to open cells or pores that are connected to the surrounding atmosphere. The first inactive member 40, 40a, 40b may include, for example, a closed-cell porous foam, an open-cell porous foam, a closed-cell porous sponge, an open-cell porous sponge, or a combination thereof. For example, the porous foam may include both closed cells and open cells at the same time. For example, the porous sponge may include both closed cells and open cells at the same time.

The first inactive member 40, 40a, 40b may include, for example, a conductive material (e.g., an electrically conductive material). Examples of the conductive material may include graphite, carbon black, acetylene black, Ketjen black, Denka black, carbon fibers, carbon nanotubes (CNTs), graphene, metal fibers, metal powder, and the like. The content of the conductive material included in the first inactive member 40, 40a, 40b may be, for example, about 1 part by weight to about 30 parts by weight, about 1 part by weight to about 20 parts by weight, about 1 part by weight to about 15 parts by weight, about 1 part by weight to about 10 parts by weight, about 5 parts by weight to about 40 parts by weight, about 5 parts by weight to about 30 parts by weight, or about 5 parts by weight to about 35 parts by weight, with respect to 100 parts by weight of the first inactive member 40, 40a, 40b. The first inactive member 40, 40a, 40b, due to having conductivity (e.g., electrical conductivity), may act as the current collector.

The first inactive member 40, 40a, 40b may include, for example, a matrix and a filler. For example, the matrix may include a substrate and a reinforcing material. For example, the matrix may include a fibrous substrate and a fibrous reinforcing material. If the matrix includes a fibrous substrate, the matrix may have elasticity. The fibrous substrate may include, for example, one or more selected from pulp fibers, insulating polymer fibers (e.g., electrically insulating polymer fibers), and ionically conductive polymer fibers. If the matrix includes the reinforcing material, strength of the matrix may improve. For example, the fibrous reinforcing material may be glass fibers, metal oxide fibers, ceramic fibers, and/or the like. The fibrous reinforcing material may be, for example, a flame-retardant material. The filler may be, for example, a moisture getter and/or a flame retardant. For example, the filler may be a metal hydroxide having hygroscopicity. The metal hydroxide included in the filler may be, for example, Mg(OH)₂, Fe(OH)₃, Sb(OH)₃, Sn(OH)₄, Tl(OH)₃, Zr(OH)₄, Al(OH)₃, or a combination thereof.

A thickness of the first inactive member 40, 40a, 40b may be, for example, more than a thickness of the first anode active material layer 22. If the thickness of the first inactive member 40, 40a, 40b is larger than that of the first anode active material layer 22, volume changes of the anode layer 20 during charging and discharging may be more effectively accommodated. A thickness of the first anode active material layer 22 may be 50% or less, 40% or less, 30% or less, 20% or less, or 10% or less, with respect to a thickness of the first inactive member 40, 40a, 40b. A thickness of the first anode active material layer 22 may be, for example, about 1% to about 50%, about 1% to about 40%, about 1% to about 30%, about 1% to about 20%, or about 1% to about 10%, with respect to a thickness of the first inactive member 40, 40a, 40b. A thickness of the first inactive member 40, 40a, 40b may be, for example, about 10 µm to about 300 µm, about 20 µm to about 300 µm, about 50 µm to about 300 µm, or about 100 µm to about 200 µm. If the first inactive member 40, 40a, 40b is excessively thin, it may be difficult to achieve the intended effect, whereas if the first inactive member 40, 40a, 40b is excessively thick, the energy density of the all-solid secondary battery 1 may decrease. The shape of the first inactive member 40, 40a, 40b is not limited and may be selected depending on the shape of the all-solid secondary battery 1. The first inactive member 40, 40a, 40b may be, for example, in the form of a sheet, a rod, or a gasket.

### Cathode Layer

### Cathode Layer: Cathode Active Material

Referring to FIGS. 1 to 12, the cathode active material layer 12 may include, for example, a cathode active material.

The cathode active material included in the cathode active material layer 12 may be a cathode active material capable of reversible absorption and desorption of lithium ions. The cathode active material may include, for example, an oxide-based cathode active material, a sulfide-based cathode active material, or a combination thereof.

The oxide-based cathode active material may include, for example, a lithium transition metal oxide, a metal oxide, or a combination thereof. The lithium transition metal oxide may include, for example, a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof. The lithium oxide may include, for example, an iron oxide, a vanadium oxide, or a combination thereof.

The sulfide-based cathode active material may include, for example, nickel sulfide, copper sulfide, Li₂S, a Li₂S-containing composite, or a combination thereof.

The oxide-based cathode active material may include, for example, one or more selected from composite oxides of lithium with a metal selected from cobalt, manganese, nickel, and a combination thereof. For example, the lithium-containing oxide-based cathode active material may include a compound represented by any one of the following chemical formulas: LiₐA_{1-b}B'_{b}D₂ (in the formula, 0.90 ≤ a ≤ 1 and 0 ≤ b ≤ 0.5); LiₐE_{1-b}B'_{b}O_{2-c}D_{c} (in the formula, 0.90 ≤ a ≤ 1, 0 ≤ b ≤ 0.5, 0 ≤ c ≤ 0.05); LiE_{2-b}B'_{b}O_{4-c}D_{c} (in the formula, 0 ≤ b ≤ 0.5, 0 ≤ c ≤ 0.05); LiₐNi_{1-b-c}Co_{b}B'_{c}D_{α} (in the formula, 0.90 ≤ a ≤ 1, 0 ≤ b ≤ 0.5, 0 ≤ c ≤ 0.05, 0 < α ≤ 2); LiₐNi_{1-b-c}Mn_{b}B'_{c}D_{α} (in the formula, 0.90 ≤ a ≤ 1, 0 ≤ b ≤ 0.5, 0 ≤ c ≤ 0.05, 0 < α ≤ 2); LiₐNi_{b}E_{c}G_{d}O₂ (in the formula, 0.90 ≤ a ≤ 1, 0 ≤ b ≤ 0.9, 0 ≤ c ≤ 0.5, 0.001 ≤ d ≤ 0.1); LiₐNi_{b}Co_{c}Mn_{d}GₑO₂ (in the formula, 0.90 ≤ a ≤ 1, 0 ≤ b ≤ 0.9, 0 ≤ c ≤ 0.5, 0 ≤ d ≤0.5, 0.001 ≤ e ≤ 0.1); LiₐNiG_{b}O₂ (in the formula, 0.90 ≤ a ≤ 1, 0.001 ≤ b ≤ 0.1); LiₐCoG_{b}O₂ (in the formula, 0.90 ≤ a ≤ 1, 0.001 ≤ b ≤ 0.1); LiₐMnG_{b}O₂ (in the formula, 0.90 ≤ a ≤ 1, 0.001 ≤ b ≤ 0.1); LiₐMn₂G_{b}O₄ (in the formula, 0.90 ≤ a ≤ 1, 0.001 ≤ b ≤ 0.1); LiV₂O₅; LiI'O₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In the formulae representing the above-described compounds, A may be nickel (Ni), cobalt (Co), manganese (Mn), or a combination thereof; B' may be aluminum (Al), Ni, Co, Mn, chromium (Cr), iron (Fe), magnesium (Mg), strontium (Sr), vanadium (V), a rare earth element, or a combination thereof; D' may be oxygen (O), fluorine (F), sulfur (S), phosphorus (P), or a combination thereof; E may be Co, Mn, or a combination thereof; F' may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I' may be Cr, V, Fe, Sc, yttrium (Y), or a combination thereof; and J may be V, Cr, Mn, Co, Ni, copper (Cu), or a combination thereof. A compound having a coating layer added on a surface of the above compound may also be used. Furthermore, a mixture of the above compound with a compound having a coating layer added thereon may also be used. The coating layer added on the surface of the aforementioned compound may include, for example, compounds of a coating element, such as oxides and hydroxides of the coating element, oxyhydroxides of the coating element, oxycarbonates of the coating element, and hydroxycarbonates of the coating element. A compound forming this coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer may be selected within a range that does not adversely affect physical properties of a cathode active material. Examples of a coating method may include spray coating, dip coating, and the like. Specific coating methods should be readily apparent to those of ordinary skill in the art upon reviewing this disclosure and therefore, further detailed descriptions thereof are not necessary here.

The oxide-based cathode active material may include, for example, a lithium transition metal oxide represented by Formulas 1 to 8 below:

Formula 1 LiₐNiₓCO_{y}M_{z}O_{2-b}A_{b}.

In Formula 1,
1.0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br or a combination thereof,

   Formula 2 LiNiₓCo_{y}Mn_{z}O₂

   Formula 3 LiNiₓCo_{y}Al_{z}O₂
wherein in Formulas 2 and 3, 0.8≤x≤0.95, 0≤y≤0.2, 0<z≤0.2, and x+y+z=1, Formula 4

   LiNiₓCo_{y}Mn_{z}Al_{w}O₂
wherein, in Formula 4, 0.8≤x≤0.95, 0≤y≤0.2, 0<z≤0.2, 0<w≤0.2, and x+y+z+w=1,

   Formula 5 LiₐCOₓM_{y}O_{2-b}A_{b}.

In Formula 5,
1.0≤a≤1.2, 0≤b≤0.2, 0.9≤x≤1, 0≤y≤0.1, and x+y=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A may be F, S, Cl, Br or a combination thereof,

   Formula 6 LiₐNiₓMn_{y}M'_{z}O_{2-b}A_{b}.

In Formula 6,
1.0≤a≤1.2, 0≤b≤0.2, 0<x≤0.3, 0.5≤y<1, 0<z≤0.3, and x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), boron (B), or a combination thereof,
A may be F, S, Cl, Br or a combination thereof,

   Formula 7 LiₐM1ₓM2_{y}PO_{4-b}X_{b}.

In Formula 7, 0.90≤a≤1.1, 0≤x≤0.9, 0≤y≤0.5, 0.9<x+y<1.1, and 0≤b≤2,
M1 may be chromium (Cr), manganese (Mn), iron (Fe), cobalt (Co), nickel (Ni), copper (Cu), zirconium (Zr), or a combination thereof, and
M2 may be magnesium (Mg), calcium (Ca), strontium (Sr), barium (Ba), titanium (Ti), zinc (Zn), boron (B), niobium (Nb), gallium (Ga), indium (In). ), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof.

   Formula 8 LiₐM3_{z}PO₄.

In Formula 8, 0.90≤a≤1.1 and 0.9≤z≤1.1,
M3 may be chromium (Cr), manganese (Mn), iron (Fe), cobalt (Co), nickel (Ni), copper (Cu), zirconium (Zr), or a combination thereof.

The oxide-based cathode active material may be covered by a cover layer. The cover layer may be any suitable material utilized as a cover layer of a cathode active material in an all-solid secondary battery in the art. The coating layer may be, for example, Li₂O-ZrO₂ (LZO) and/or the like.

A size of the oxide-based cathode active material may be, for example, about 0.1 µm to about 30 µm, about 0.5 µm to about 20 µm, or about 1 µm to about 15 µm. The oxide-based cathode active material may be, for example, single-crystal particles and/or polycrystal particles.

The sulfide-based cathode active materials may include, for example, a Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof.

The composite of Li₂S and carbon may include a carbon. The carbon may be, for example, any suitable carbon-containing material available as a conductive material (e.g., an electrically conductive material) in the art. The carbon may be, for example, crystalline carbon, amorphous carbon, or a combination thereof. The carbon may be, for example, a fired product of a carbon precursor. The carbon may be, for example, a carbon nanostructure. Examples of the carbon nanostructure may include a one-dimensional carbon nanostructure, a two-dimensional carbon nanostructure, a three-dimensional carbon nanostructure, or a combination thereof. The carbon nanostructure may include, for example, carbon nanotubes, carbon nanofibers, carbon nanobelts, carbon nanorods, graphene, graphene oxide (GO), reduced graphene oxide (rGO), graphene balls (GB), or a combination thereof. The carbon may be, for example, porous carbon and/or non-porous carbon. The porous carbon may contain, for example, a periodic and regular two-dimensional or three-dimensional pore. Examples of the porous carbon may include carbon black such as Ketjen black, acetylene black, Denka black, thermal black, and channel black; and graphite, activated carbon, or a combination thereof. The form of the carbon may be a particulate form, a sheet form, a fibrous form, and/or the like, but without being limited thereto, any suitable material available as carbon in the art may be utilized. The composite of Li₂S and carbon may be prepared by methods including, but not limited to a dry method, a wet method, or a combination thereof. Further, methods available in the art for preparing a composite of Li₂S and carbon include milling, heat treatment, deposition, and/or the like, but without being limited to the aforementioned methods, any suitable method available in the art may be utilized.

The composite of Li₂S, carbon, and solid electrolyte composite may include a carbon and a solid electrolyte. For details of the carbon, refer to the composite of Li₂S and carbon described above. The solid electrolyte may be, for example, a formless solid electrolyte and may be any suitable material available as an ionically conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may contain, for example, Li, S, and P, and may optionally further contain a halogen element. The sulfide-based solid electrolyte may be selected from sulfide-based solid electrolytes that are used in a solid electrolyte layer. The sulfide-based solid electrolyte may have an ionic conductivity of 1×10⁻⁵ S/cm or more at room temperature, for example. The sulfide-based solid electrolyte may include, for example, one or more selected from Li₃PO₄-Li₂SO₄, Li₂S-P₂S₅ and Li₂S-P₂S₅-LiX, wherein X is a halogen element; Li₂S-P₂S₅-Li₂O, Li₂S-P₂S₅-Li₂O-Lil, Li₂S-SiS₂, Li₂S-SiS₂-Lil, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z is Ge, Zn or Ga; Li₂S-GeS₂, Li₂S-SiS₂-Li₃PO₄, and Li₂S-SiS₂-LiₚMO_{q}, wherein p and q each are a positive number and M is P, Si, Ge, B, Al, Ga or In; Li₇₋ₓPS₆₋ₓClₓ, wherein 0≤x≤2; Li₇₋ₓPS₆₋ₓBrₓ, wherein 0≤x≤2; and Li₇₋ₓPS₆₋ₓIₓ, wherein 0≤x≤2. The oxide-based solid electrolyte may contain, for example, Li, O, and a transition metal element, and may optionally further contain other suitable elements. For example, the oxide-based solid electrolyte may be a solid electrolyte having an ionic conductivity of 1×10⁻⁵ S/cm or more at room temperature. The oxide-based solid electrolyte may be selected from oxide-based solid electrolytes that are used in a solid electrolyte layer. The solid electrolyte may be a mixture of a sulfide-based solid electrolyte and a lithium salt, for example. For example, the solid electrolyte may be a mixture of Li₃PO₄-Li₂SO₄ and a binary lithium salt or a mixture of Li₃PO₄-Li₂SO₄ and a ternary lithium salt.

The composite of Li₂S and solid electrolyte may include a solid electrolyte. For details of the solid electrolyte, refer to the composite of Li₂S, carbon, and solid electrolyte above.

A composite of Li₂S and a lithium salt may include a lithium salt compound. The lithium salt compound does not contain sulfur (S) atoms, for example. For example, the lithium salt compound may be a binary compound composed of lithium and one element selected from Groups 13 to 17 of the Periodic Table of the Elements. The binary compound may include, for example, one or more selected from LiF, LiCl, LiBr, LiI, LiH, Li₂S, Li₂O, Li₂Se, Li₂Te, LisN, LisP, Li₃As, LisSb, LiI₃, and LiBs. For example, the lithium salt compound may be a ternary compound composed of lithium and two or more elements selected from Groups 13 to 17 of the Periodic Table of the Elements. The ternary compound may include, for example, one or more selected from Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, and Li₃BN₂. In some embodiment, the lithium salt compound may be at least one lithium halide compound selected from among LiF, LiCl, LiBr, and Lil. The composite of Li₂S and solid electrolyte may include a solid electrolyte. For details of the solid electrolyte, refer to the solid electrolyte used in the composite of Li₂S, carbon, and a solid electrolyte described above. The composite of Li₂S and a solid electrolyte may include, for example, a composite of Li₂S with one or more lithium salts selected from LiF, LiCl, LiBr, Lil, LiH, Li₂S, Li₂O, Li₂Se, Li₂Te, LisN, LisP, Li₃As, Li₃Sb, LiI₃, and LiBs.

A composite of Li₂S, a lithium salt, and carbon may include a lithium salt compound and carbon. For details of the carbon, refer to the composite of Li₂S and carbon described above.

The composite of Li₂S and metal carbide may include a metal carbide. The metal carbide may be, for example, a two-dimensional metal carbide. A two-dimensional metal carbide may be, for example, MXene. The two-dimensional metal carbide may be represented by, for example, Mₙ₊₁CₙTₓ (M is a transition metal, T is a terminal group, T is O, OH and/or F, n = 1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a combination thereof. The surface of the two-dimensional metal carbide may be terminated by O, OH, and/or F.

The composite of Li₂S, carbon, and a metal carbide may include carbon and a metal carbide. For details of the carbon, refer to the composite of Li₂S and carbon described above. For details of the metal carbide, refer to the composite of Li₂S and a metal carbide described above.

The composite of Li₂S and a metal nitride may include a metal nitride. The metal nitride may be, for example, a two-dimensional metal nitride. The two-dimensional metal nitride may be represented by, for example, Mₙ₊₁NₙTₓ (M is a transition metal, T is a terminal group, T is O, OH and/or F, n = 1, 2, or 3, and x is the number of terminal groups). The surface of the two-dimensional metal nitride may be terminated by O, OH, and/or F.

The composite of Li₂S, carbon, and a metal nitride may include carbon and a metal nitride. For details of the carbon, refer to the composite of Li₂S and carbon described above. For details of the metal carbide, refer to the composite of Li₂S and a metal nitride described above.

The Li₂S-containing composite may further include, for example, a second fibrous sulfide-based solid electrolyte. The Li₂S-containing composite may be a composite of Li₂S and a second fibrous sulfide-based solid electrolyte, or a composite of Li₂S, a second fibrous sulfide-based solid electrolyte, and any one of the carbon, solid electrolytes, lithium salts, metal carbides, and/or metal nitrides described above. The cathode layer may further include, for example, a first fibrous sulfide-based solid electrolyte.

Further inclusion of a second fibrous sulfide-based solid electrolyte in the Li₂S-containing composite may further suppress or reduce deterioration of a lithium battery and further improve cycling performance of the lithium battery. A size of the second fibrous sulfide-based solid electrolyte may be smaller than a size of the first fibrous sulfide-based solid electrolyte. A length and/or thickness of the second fibrous sulfide-based solid electrolyte may be 50% or less, 40% or less, 30% or less, 20% or less, or 10% or less, with respect to the length and/or thickness of the first fibrous sulfide-based solid electrolyte, respectively. The length and/or thickness of the second fibrous sulfide-based solid electrolyte may be about 0.1% to about 50%, about 0.5% to about 40%, about 1% to about 30%, about 1% to about 20%, or about 1% to about 10%, with respect to the length and/or thickness of the first fibrous sulfide-based solid electrolyte, respectively. The second fibrous sulfide-based solid electrolyte may have the same shape as, but a smaller size than, the first fibrous sulfide-based solid electrolyte. If the second fibrous sulfide-based solid electrolyte has such a reduced length and/or thickness, distribution within a Li₂S-containing composite may be more easily achieved. If the second fibrous sulfide-based solid electrolyte has such a reduced length and/or thickness, deterioration of a lithium battery may be further suppressed or reduced, and cycling performance of the lithium battery may further improve.

The size of the sulfide-based cathode active material may be, for example, about 0.1 µm to about 50 µm, about 0.5 µm to about 30 µm, about 0.5 µm to about 20 µm, or about 1 µm to about 10 µm. The size of Li₂S may be, for example, about 1 nm to about 10 µm, about 10 nm to about 5 µm, about 10 nm to about 3 µm, or about 10 nm to about 1 µm. The size of the Li₂S-containing composite may be, for example, about 0.1 µm to about 50 µm, about 0.5 µm to about 30 µm, about 0.5 µm to about 20 µm, or about 1 µm to about 10 µm.

The form of the cathode active material may have a particulate form, such as a perfect sphere shape, an oval sphere shape, and/or the like. The particle diameter of the cathode active material is not limited and may be within a range that is applicable to a cathode active material of a conventional all-solid secondary battery. The content of the cathode active material in the cathode layer 10 is not limited and may be within a range applicable to a cathode layer of a conventional all-solid secondary battery. The content of the cathode active material included in a cathode active material layer 12 may be, for example, about 10 wt% to about 99 wt%, about 10 wt% to about 90 wt%, about 10 wt% to about 80 wt%, about 10 wt% to about 70 wt%, or about 10 wt% to about 50 wt%, with respect to a total weight of the cathode active material layer 12.

### Cathode Layer: Solid Electrolyte

The cathode active material layer 12 may further include, for example, a solid electrolyte. The solid electrolyte may be a sulfide-based solid electrolyte, for example. The solid electrolyte included in the cathode layer 10 may be identical to or different from a solid electrolyte included in the solid electrolyte layer 30. For details of the solid electrolyte, refer to the description of the solid electrolyte layer 30.

The solid electrolyte included in the cathode active material layer 12 may have a smaller median particle diameter D50 than that of the solid electrolyte included in the solid electrolyte layer 30. For example, the median particle diameter D50 of the solid electrolyte included in the cathode active material layer 12 may be 90% or less, 80% or less, 70% or less, 60% or less, 50% or less, 40% or less, 30% or less, or 20% or less, with respect to the median particle diameter D50 of the solid electrolyte included in the solid electrolyte layer 30. D50 average particle diameter may be, for example, a median particle diameter (D50). Median particle diameter (D50) may refer to a particle size corresponding to a cumulative volume of 50 vol% as counted from the smallest particle size in a particle size distribution measured by a laser diffraction method.

For example, the content of the solid electrolyte included in the cathode active material layer 12 may be about 1 wt% to about 40 wt%, about 1 wt% to about 30 wt%, about 1 wt% to about 20 wt%, or about 1 wt% to about 10 wt%, with respect to a total weight of the cathode active material layer 12.

### Cathode Layer: Conductive Material

The cathode active material layer 12 may further include a conductive material (e.g., an electrically conductive material). The conductive material may be, for example, a carbon-based conductive material (e.g., a carbon-based electrically conductive material), a metal-based conductive material (e.g., a metal-based electrically conductive material), or a combination thereof. Examples of the carbon-based conductive material may include graphite, carbon black, acetylene black, Ketjen black, carbon fibers, and a combination thereof. However, the carbon-based conductive material is not limited to the aforementioned examples and may be any suitable material available as a carbon-based conductive material in the art. The metal-based conductive material may be metal powder, metal fibers, or a combination thereof, but without being limited thereto and may be any suitable metal-based conductive material (e.g., metal-based electrically conductive material) available in the art. For example, the content of the conductive material included in the cathode active material layer 12 may be about 1 wt% to about 30 wt%, about 1 wt% to about 20 wt%, about 1 wt% to about 10 wt%, with respect to the total weight of the cathode active material layer 12.

### Cathode Layer: Binder

The cathode active material layer 12 may further include a binder. The binder may be, for example, styrene butadiene rubber (SBR), polytetrafluoroethylene, polyvinylidene fluoride, polyethylene, and/or the like, but without being limited to the aforementioned examples, may utilize any suitable material used as a binder in the art. The content of the binder included in the cathode active material layer 12 may be, for example, about 1 wt% to about 10 wt% with respect to the total weight of the cathode active material layer 12. In some embodiments, the binder may be omitted.

### Cathode Layer: Other Additives

The cathode active material layer 12 may further include, for example, an additive such as a filler, a coating agent, a dispersing agent, and an ionically conductive aid, in addition to the cathode active material, the solid electrolyte, the binder, and the conductive material described above.

For the filler, coating agent, dispersing agent, and ionically conductive aid that may be included in the cathode active material layer 12, any suitable material generally used in the art in an electrode of an all-solid secondary battery may be utilized.

### Dry Cathode: Cathode Current Collector

For example, the cathode current collector 11 may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof. In some embodiments, the cathode current collector 11 may be omitted. The cathode current collector 11 may have a thickness of, for example, about 1 µm to about 100 µm, about 1 µm to about 50 µm, about 5 µm to about 25 µm, or about 10 µm to about 20 µm.

For example, the cathode current collector 11 may include a base film, and a metal layer on one surface or opposite surfaces of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. For example, the base film may be an insulator (e.g., an electrical insulator). If the base film includes an insulating thermoplastic polymer (e.g., an electrically insulating thermoplastic polymer), in the event of a short circuit, the base film is softened or liquefied, blocking or reducing the operation of the battery, to thereby prevent or reduce a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), and/or an alloy thereof. In the event of an overcurrent, the metal layer may be disconnected, thus acting as an electrochemical fuse to provide protection against short circuits. A limiting current and a maximum current may be controlled by controlling a thickness of the metal layer. The metal layer may be plated and/or deposited on the base film. As the thickness of the metal layer decreases, the limiting current and/or maximum current of the cathode current collector 11 decrease, and therefore, the stability of the lithium battery during a short circuit may improve. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be an aluminum foil, a copper foil, an SUS foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of about 1 µm to about 50 µm, about 1.5 µm to about 50 µm, about 1.5 µm to about 40 µm, or about 1 µm to about 30 µm. With the base film having a thickness within the above ranges, the weight of the electrode assembly may be more effectively reduced. For example, the base film may have a melting point of about 100 °C to about 300 °C, about 100 °C to about 250 °C or less, or about 100 °C to about 200 °C. If the base film has a melting point within the above ranges, the base film may easily melt and be bonded to the lead-tab while welding the lead-tab. To improve adhesion between the base film and the metal layer, a surface treatment such as corona treatment may be performed on the base film. For example, the metal layer may have a thickness of about 0.01 µm to about 3 µm, about 0.1 µm to about 3 µm, about 0.1 µm to about 2 µm, or about 0.1 µm to about 1 µm. With the metal layer having a thickness within the above ranges, the electrode assembly may provide stability while maintaining conductivity (e.g., electrical conductivity). For example, the metal chip may have a thickness of about 2 µm to about 10 µm, about 2 µm to about 7 µm, or about 4 µm to about 6 µm. With the metal chip having a thickness within the above ranges, the metal layer and the lead-tab may be more easily connected. If the cathode current collector 11 has the above structure, the weight of the cathode may be reduced, and consequently, the energy density of the cathode and the all-solid secondary battery may improve.

### Cathode Layer: First Inactive Member

Referring to FIGS. 4 and 5 and FIGS. 8 to 12, the all-solid secondary battery 1 may further include a first inactive member 40, 40a, 40b on at least one of the opposite surface to the one surface of the anode current collector 21 and the opposite surface to the one surface of the cathode current collector 11.

For details of the first inactive member 40a, 40a, 40b, refer to the first inactive member 40a, 40a, 40b of the anode layer described above.

### Cathode Layer: Second Inactive Member

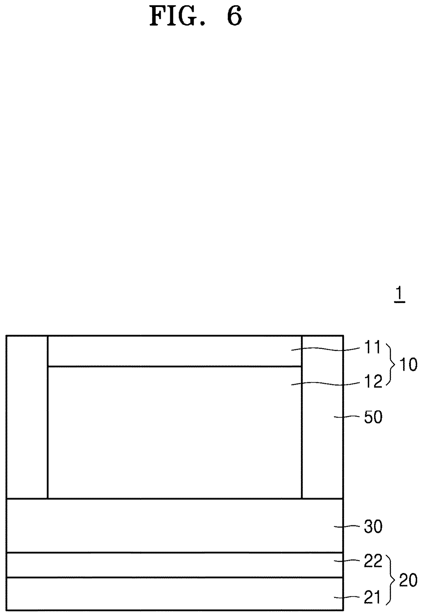

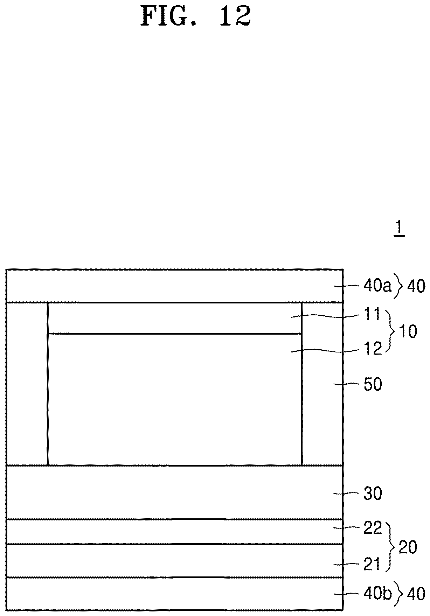

Referring to FIGS. 6 and 12, a cathode layer 10 may include a cathode current collector 11 and a cathode active material layer 12 on one surface of the cathode current collector 11. A second inactive member 50 may be on one surface of the cathode layer 10.

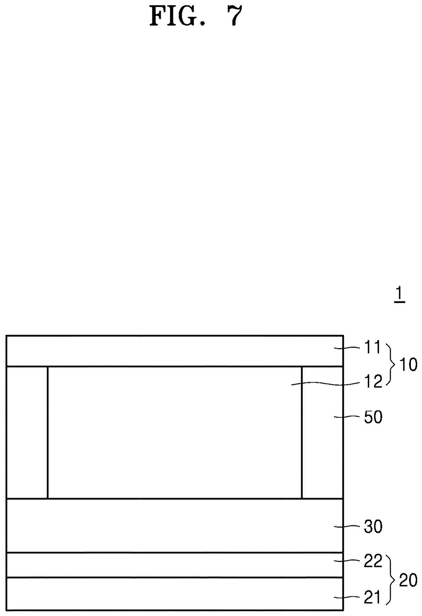

Referring to FIGS. 7, 9, and 11, the second inactive member 50 may be on one side surface of the cathode active material layer 12 and between the solid electrolyte layer 30 and the cathode current collector 11 opposing the solid electrolyte layer 30. The second inactive member 40 may not be on one side surface of the cathode current collector 11. Referring to FIGS. 6, 8, 10, and 12, the second inactive member 50 may be on one side surface of the cathode current collector 11 and the cathode active material layer 12. Because including the first inactive member 42 prevents or reduces crack formation in the solid electrolyte layer 30 at the time of manufacturing and/or during charging and discharging of an all-solid secondary battery 1, improved cycling performance of the all-solid secondary battery 1 may be achieved. In an all-solid secondary battery 1 that does not include the second inactive member 50, non-uniform pressure may be applied to the solid electrolyte layer 30 that is in contact (e.g., direct physical contact) with the cathode layer 10 during manufacturing and/or charging and discharging of the all-solid secondary battery 1, giving rise to crack formation in the solid electrolyte layer 30 and subsequently, growth of lithium metal, and as a result, the likelihood of a short circuit occurring may increase.

Referring to FIGS. 6 to 12, in the all-solid secondary battery 1, a thickness of the second inactive member 50 may be, for example, more than a thickness of the first anode active material layer 22. For example, a thickness of the second inactive member 50 may be more than a thickness of the solid electrolyte layer 30.

Referring to FIGS. 6 to 12, the second inactive member 50 may be in contact (e.g., direct physical contact) with the solid electrolyte layer 30 while surrounding a side surface of the cathode layer 10. If the second inactive member 50 is in contact (e.g., direct physical contact) with the solid electrolyte layer 30 while surrounding a side surface of the cathode layer 10, crack formation in the solid electrolyte layer 30 that is not in contact (e.g., direct physical contact) with the cathode layer 10, which may be caused by a pressure difference during a press process, may be effectively prevented or reduced. The second inactive member 50, while surrounding a side surface of the cathode layer 10, may be apart from the anode layer 20, for example, from a first anode active material layer 22. The second inactive member 50 may be, while surrounding a side surface of the cathode layer 10, in contact (e.g., direct physical contact) with the solid electrolyte layer 30 and apart from the anode layer 20. In some embodiments, the likelihood of a short circuit occurring due to the cathode layer 10 and a first anode active material layer 22 coming into physical contact with each other, or the likelihood of a short circuit occurring due to overcharging of lithium, etc. may then be reduced. If the second inactive member 50 is on both one side surface of the cathode current collector 11 and the cathode active material layer 12, the likelihood of a short circuit occurring due to the cathode current collector 11 and the anode layer 20 coming in contact (e.g., direct physical contact) with each other may be more effectively suppressed or reduced.

Referring to FIGS. 6 to 12, a second inactive member 41, 41a, 41b may extend from one side surface of a cathode layer 30 to an end portion of a solid electrolyte layer 30. Because the second inactive member 50 extends to the end portion of the solid electrolyte layer 30, crack formation in the end portion of the solid electrolyte layer 30 may be suppressed or reduced. The end portion of the solid electrolyte layer 30 may be an outermost portion that is in contact (e.g., direct physical contact) with a side surface of the solid electrolyte layer 30. The second inactive member 50 may extend to an outermost portion that is in contact (e.g., direct physical contact) with a side surface of the solid electrolyte layer 30. The second inactive member 50 may be apart from the anode layer 20, for example, from the first anode active material layer 22. The second inactive member 50 may extend to the end portion of the solid electrolyte layer 30, but may not come in contact (e.g., direct physical contact) with the anode layer 20. For example, the second inactive member 50 may fill a space that is between one side surface of the cathode layer 30 and an end portion of the solid electrolyte layer 30.

The surface area of the cathode active material layer 12 or the cathode layer 10 may be less than the surface area of the first anode active material layer 22 or the anode layer 20. The surface area of the cathode active material layer 12 or the cathode layer 10 may be less than the surface area of the solid electrolyte layer 30.

The second inactive member 50 may be, for example, a gasket. If a gasket is used as the second inactive member 50, crack formation in the solid electrolyte layer 30 due to a pressure difference during a press process may be effectively suppressed or reduced.

For example, the second inactive member 50 may have a monolayer structure. In some embodiments, the second inactive member 50 may have a multilayer structure. The multilayer structure may have, for example, a two-layer, three-layer, or four-layer structure, and having such a multilayer structure may allow more precise control of physical properties of the second inactive member 50.

In some embodiments, part or all of the second inactive member 50 may be spaced apart from a side surface of the cathode active material layer 12. If part or all of the second inactive member 50 is spaced apart from a side surface of the cathode active material layer 12, the manufacturing process of an all-solid secondary battery 1 may be further facilitated or improved, and the manufacturing speed of the all-solid secondary battery 1 may increase. If part or all of the second inactive member 50 is spaced apart from a side surface of the cathode active material layer 12, volume changes towards the side surface of the cathode active material layer 12 during charging and discharging may be more effectively accommodated, further improving lifespan characteristics of the all-solid secondary battery 1. The distance between the second inactive member 50 and the side surface of the cathode active material layer 12 may be, for example, about 0.1 µm to about 10 mm, about 1 µm to about 1 mm, about 1 µm to about 500 µm, about 1 µm to about 100 µm, about 1 µm to about 50 µm, or about 1 µm to about 10 µm.

Referring to FIGS. 1 to 12, the second inactive member 50 may be selected from, for example, materials used in the first inactive member 40, 40a, 40b described above. The second inactive member 50 may not contain, for example, an electrode active material. The second inactive member 50 may be, for example, a flame-retardant inactive member, an electronically-insulating inactive member, an ionically-insulating inactive member, and/or an elastic inactive member.

### Solid Electrolyte Layer

### Solid Electrolyte Layer: Solid Electrolyte

Referring to FIGS. 1 to 12, the solid electrolyte layer 30 may include a solid electrolyte layer between the cathode layer 10 and the anode layer 20. The solid electrolyte layer may include, for example, a solid electrolyte, or a combination of a solid electrolyte and a gel electrolyte.

Examples of the solid electrolyte may include a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may be, for example, one or more selected from Li₂S-P₂S₅, Li₂S-P₂S₅-LiX wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ wherein m and n each are a positive number, and Z is Ge, Zn or Ga, Li₂S-GeS₂, Li₂S-SiS₂-Li₃PO₄, Li₂S-SiS₂-LiₚMO_{q} wherein p and q each are a positive number and M is P, Si, Ge, B, Al, Ga or In, Li₇₋ₓPS₆₋ₓClₓ wherein 0≤x≤2, Li₇₋ₓPS₆₋ₓBrₓ wherein 0≤x≤2, and Li₇₋ₓPS₆₋ₓIₓ wherein 0≤x≤2. The sulfide-based solid electrolyte may be prepared by treating starting materials, such as Li₂S and/or P₂S₅, by a method such as melt-quenching, mechanical milling, and/or the like. In some embodiments, following such a treatment, heat treatment may be conducted. The sulfide-based solid electrolyte may be amorphous or crystalline, or may be in a mixed state thereof. In some embodiments, the solid electrolyte may be, among the sulfide-based solid electrolyte materials described herein, a material that contains at least sulfur (S), phosphorus (P), and lithium (Li), as its constitutive elements. For example, the solid electrolyte may be a material including Li₂S-P₂S₅. If a sulfide-based solid electrolyte material used to form the solid electrolyte contains Li₂S-P₂S₅, the mixing molar ratio of Li₂S : P₂S₅ may be in a range of, for example, about 20 : 80 to about 90 : 10, about 25 : 75 to about 90 : 10, about 30 : 70 to about 70: 30, or about 40: 60 to about 60: 40.

For example, the sulfide-based solid electrolyte may include an argyrodite-type solid electrolyte represented by Formula 1:

Formula 1 Li⁺₁₂₋ₙ₋ₓAⁿ⁺X²⁻₆₋ₓY⁻ₓ.

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, and 1≤n≤5 and 0≤x≤2 may be satisfied. For example, the sulfide-based solid electrolyte may be an argyrodite-type compound including one or more selected from Li₇₋ₓPS₆₋ₓClₓ wherein 0≤x≤2, Li₇₋ₓPS₆₋ₓBrₓ wherein 0≤x≤2, and Li₇₋ₓPS₆₋ₓIₓ wherein 0≤x≤2. For example, the sulfide-based solid electrolyte may be an argyrodite-type compound including at least one selected from Li₆PS₅Cl, Li₆PS₅Br, and Li₆PS₅I.

An argyrodite-type solid electrolyte may have a density of about 1.5 g/cc to about 2.0 g/cc. If the argyrodite-type solid electrolyte has a density of 1.5 g/cc or more, an internal resistance of an all-solid secondary battery may be reduced, and Li penetration to the solid electrolyte layer may be more effectively suppressed or reduced.

The oxide-based all-solid electrolyte may be, for example, Li_{1+x+y}AlₓTi₂₋ₓSi_{y}P_{3-y}O₁₂ (0<x<2 and 0≤y<3), BaTiO₃, Pb(Zr,Ti)O₃ (PZT), Pb₁₋ₓLaₓZr_{1-y} Ti_{y}O₃ (PLZT) (0≤x<1 and 0≤y<1), PB(Mg₃Nb_{2/3})O₃-PbTiO₃ (PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P₃-_{y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, and 0≤x≤10), or a combination thereof. The oxide-based solid electrolyte is produced, for example, by a sintering method and/or the like.

For example, the oxide-based solid electrolyte may be a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, and 0<a<2 and 0≤x≤10).

For example, the polymer solid electrolyte may include a mixture of a lithium salt and a polymer, and/or may include a polymer having an ion-conducting functional group. For example, the polymer solid electrolyte may be a polymer electrolyte that is in a solid state at 25 °C and 1 atm. For example, the polymer solid electrolyte may not contain liquid. The polymer solid electrolyte may include a polymer, and the polymer may be, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or a combination thereof. However, the polymer is not limited to the aforementioned examples and may be any suitable material used in polymer electrolytes in the art. The lithium salt may be any suitable lithium salt available in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each an integer of 1 to 20), LiCl, Lil, or a mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of 1,000 Dalton or more, 10,000 Dalton or more, 100,000 Dalton or more, or 1,000,000 Dalton or more.

For example, the gel electrolyte may be a polymer gel electrolyte. For example, the gel electrolyte may have a gel state while not containing a polymer.

For example, the polymer gel electrolyte may include a liquid electrolyte and a polymer, and/or an organic solvent and a polymer having an ion-conducting functional group. For example, the polymer gel electrolyte may be a polymer electrolyte that is in a gel state at 25 °C and 1 atm. For example, the polymer gel electrolyte may have a gel state without containing liquid. The liquid electrolyte used in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from polymers used in solid polymer electrolytes. The organic solvent may be selected from organic solvents used in liquid electrolytes. The lithium salt may be selected from lithium salts used in polymer solid electrolytes. The ionic liquid may refer to a room-temperature molten salt or a salt that is in a liquid state at room temperature, which only consists of ions and has a melting point of room temperature or lower. For example, the ionic liquid may be at least one selected from compounds containing: a) at least one cation selected from ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br, I-, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. For example, the polymer solid electrolyte may form a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of 500 Dalton or more, 1,000 Dalton or more, 10,000 Dalton or more, 100,000 Dalton or more, or 1,000,000 Dalton or more.

### Solid Electrolyte Layer: Binder

The solid electrolyte layer 30 may further include, for example, a binder. The binder included in the solid electrolyte layer 30 may be, for example, styrene butadiene rubber (SBR), polytetrafluoroethylene, polyvinylidene fluoride, polyethylene, and/or the like, but without being limited to the aforementioned examples, may utilize any suitable binder available in the art. The binder in the solid electrolyte layer 30 may be identical to or different from a binder included in the cathode active material layer 12 and the anode active material layer 22. In some embodiments, the binder may be omitted.

The content of the binder included in the solid electrolyte layer 30 may be, about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt%, with respect to the total weight of the solid electrolyte layer 30.

The subject matter of the present disclosure will be described in greater detail through the following examples and comparative examples. However, it will be understood that the examples are provided only to illustrate example embodiments of the present disclosure and not to be construed as limiting the scope of the present disclosure.

### Preparation of Composite Anode Active Materials

### Preparation Example 1: Silica-containing composite anode active material, Silica content 40 wt%

SiO₂ particles (average particle diameter: about 15 nm) were loaded into a reactor, and with CH₄ being supplied into the reactor at 300 sccm and 1 atm for about 30 minutes, the temperature inside the reactor was elevated to 1,000 °C.

Subsequently, a heat treatment was performed while maintaining the above temperature for 7 hours. Then, the temperature inside the reactor was adjusted to room temperature (20 °C to 25 °C) to obtain a composite anode active material in which SiO₂ particles and a reduction product thereof, SiO_{y} (0<y<2) particles, are embedded in graphene.

In the composite anode active material, the content of silica and reduction products thereof was 40 wt% of the total weight of the composite anode active material.

### Preparation Example 2: Silica-containing composite anode active material, silica content 60 wt%

A composite anode active material was prepared following the same process as Preparation Example 1, except that the silica content was changed to 60 wt% with respect to the total weight of the composite anode active material.

### Preparation Example 3: Silica-containing composite anode active material, Silica content 20 wt%

A composite anode active material was prepared following the same process as Preparation Example 1, except that the silica content was changed to 20 wt% with respect to the total weight of the composite anode active material.

### Comparative Preparation Example 1: Alumina-containing composite anode active material, Alumina content 40 wt%

Al₂O₃ particles (average particle diameter: about 15 nm) were loaded into a reactor, and with CH₄ being supplied into the reactor at 300 sccm and 1 atm for about 30 minutes, the temperature inside the reactor was elevated to 1,000 °C.

Subsequently, a heat treatment was performed while maintaining the above temperature for 7 hours. Then, the temperature inside the reactor was adjusted to room temperature (20 °C-25 °C) to obtain a composite anode active material in which Al₂O₃ particles and a reduction product thereof, Al₂O_{z} (0<z<3) particles, are embedded in graphene. In the composite anode active material, the content of alumina and reduction products thereof was 40 wt% of the total weight of the composite anode active material.

### Preparation of sulfide-based composite cathode active material

### Preparation Example 4: Li₂S-LiI-CNF composite cathode active material

Li₂S and LiI were mixed in a weight ratio of 30:20. The resulting mixture was mechanically milled using a ball mill, to produce a Li₂S-LiI composite. The milling conditions were for 10 hours at 25 °C, at 510 rpm.

The Li₂S-LiI composite and carbon nanofibers (CNFs) were mixed in a weight ratio of 50 : 10. A Li₂S-LiI-CNF composite was prepared by mechanically milling the mixture using a ball mill. The milling conditions were for 10 hours at 25 °C, 510 rpm. The Li₂S-LiI-CNF composite was used as a composite cathode active material.

### Preparation of All-Solid Secondary Battery

### Example 1: Elastic sheet (50 µm)/Cathode layer (112 µm, NCA)/Solid electrolyte layer (30 µm)/Anode layer (37 µm, Silica composite (Silica 40 wt%)+Ag-C); (Silica composite: Ag-C in weight ratio of 3:1)

### Preparation of Cathode Layer

LiNi_{0.8}Co_{0.15}Al_{0.05}O₂ (NCM) coated with Li₂O-ZrO₂ (LZO) was prepared as a cathode active material. The LZO-coated cathode active material was prepared following the method disclosed in Korean Patent No. 10-2016-0064942. As a solid electrolyte, argyrodite-type Li₆PS₅Cl crystals (D50=0.5 µm, crystalline) were prepared. As a binder, a polytetrafluoroethylene (PTFE) binder was prepared. As a conducting agent, carbon nanofibers (CNFs) were prepared. These materials were mixed at a weight ratio of cathode active material: solid electrolyte : conducting agent = 84 : 11 : 3 : 2 with xylene as solvent to form a slurry, and the resulting slurry was molded into a sheet form, and the resulting sheet was vacuum-dried at 40 °C for 8 hours to prepare a cathode sheet. Using a cathode current collector formed of an aluminum foil coated with a carbon layer, the prepared cathode sheet was placed on the carbon layer and subjected to a heated roll-press at 85 °C to produce a cathode layer. The total thickness of the cathode layer was about 112 µm. The thickness of the cathode active material layer was about 92 µm, and the thickness of the carbon-coated aluminum foil was about 20 µm.

### Preparation of Anode Layer

As an anode current collector, a 10 µm-thick SUS foil was prepared. The composite anode active material prepared in Preparation Example 1 was prepared as a first anode active material. As a second anode active material, a mixture containing carbon black (CB) having a primary particle diameter of about 30 nm and silver (Ag) particles having an average particle diameter of about 60 nm in a weight ratio of 3 : 1 was prepared.

3 g of the composite anode active material powder and 1 g of the mixture of CB and Ag particles were placed in a vessel, and 4 g of an NMP solution containing 7 wt% of PVDF binder (KUREHA, #9300) was added thereto to prepare a mixed solution. The prepared mixed solution was stirred while adding NMP in small contents to this mixed solution, to produce a slurry. The prepared slurry was applied onto a SUS substrate by using a bar coater, and then dried in open air at 80 °C for 10 minutes, and vacuum-dried at 40 °C for 10 hours to prepare a laminate. The prepared laminate was cold roll-pressed to flatten the surface thereof, to prepare an anode having the first anode active material layer/anode current collector structure. The thickness of the first anode active material layer was about 27 µm.

The ratio B/A of initial charge capacity B of the first anode active material layer to initial charge capacity A of the cathode active material layer was less than 1. The initial charge capacity of the cathode active material layer was determined by charging from a 1^{st} open circuit voltage to 4.25 V vs. Li/Li⁺. The initial charge capacity of the first anode active material layer was determined by charging from a 2^{nd} open circuit voltage to 0.01 V vs. Li/Li⁺. An initial charge capacity of the cathode layer (i.e., cathode active material layer) and an initial charge capacity of the anode layer (i.e., first anode active material layer) was measured by the half-cell as described above, respectively.

### Preparation of Solid Electrolyte Layer

In argyrodite-type crystal Li₆PS₅Cl solid electrolyte (D₅₀=3.0 µm, crystalline), 1.5 parts by weight of an acryl-based binder with respect to 98.5 parts by weight of the solid electrolyte was added to prepare a mixture. The prepared mixture was stirred while adding octyl acetate thereto, to prepare a slurry. The prepared slurry was applied onto a nonwoven fabric placed on a PET substrate by using a bar coater, and dried in air at 80 °C for 10 minutes to prepare a laminate. The prepared laminate was vacuum-dried at a temperature of 80 °C for 2 hours to prepare a solid electrolyte layer.

### Inactive Member: Elastic Sheet

A 50 µm-thick porous polyurethane foam sheet was prepared as an elastic sheet.

### Preparation of All-Solid Secondary Battery

A solid electrolyte layer was placed on an anode such that a first anode active material layer was in contact with the solid electrolyte layer, and a cathode was placed on the solid electrolyte layer such that a cathode active material layer was in contact with the solid electrolyte layer, to prepare a laminate.

The prepared laminate was plate-pressed with a pressure of 500 MPa at 85 °C for 30 minutes. By such a press treatment, the solid electrolyte layer was sintered, resulting in the improvement of the battery performance. The thickness of the sintered solid electrolyte layer was about 30 µm. The density of the argyrodite-type crystal Li₆PS₅Cl solid electrolyte included in the sintered solid electrolyte layer was 1.6 g/cc. The surface area of the solid electrolyte layer was the same as the surface area of the anode. An elastic sheet was additionally placed on the cathode current collector of the pressed laminate.

The laminate further including the elastic sheet was then placed in a pouch and vacuum-sealed, to produce an all-solid secondary battery. A part of the cathode current collector and a part of the anode current collector were extended out of the sealed battery and used as a cathode terminal and an anode terminal, respectively.

### Example 2: Elastic sheet (50 µm)/Cathode layer (112 µm, NCA)/Solid electrolyte layer (30 µm)/Anode layer (37 µm, Silica composite (Silica 60 wt%)+Ag-C); (Silica composite: Ag-C in weight ratio of 3:1)

An all-solid secondary battery was prepared following the same process as in Example 1, except that the composite anode active material prepared in Preparation Example 2 was used as the first anode active material.

### Example 3: Elastic sheet (50 µm)/Cathode layer (112 µm, NCA)/Solid electrolyte layer (30 µm)/Anode layer (37 µm, Silica composite (Silica 20 wt%)+Ag-C); (Silica composite: Ag-C in weight ratio of 3:1)

An all-solid secondary battery was prepared following the same process as in Example 1, except that the composite anode active material prepared in Preparation Example 3 was used as the first anode active material.

### Example 4: Elastic sheet (50 µm)/Cathode layer (112 µm, NCA)/Solid electrolyte layer (30 µm)/Anode layer (37 µm, Silica composite (Silica 40 wt%)+Ag-supported carbon); (Silica composite: Ag-supported carbon in weight ratio of 3:1)

An all-solid secondary battery was prepared following the same process as in Example 1, except that, instead of the mixture of CB and Ag particles, CB supported with Ag particles described below was used as an anode active material.

### Preparation of Ag particles-supported CB

CB was dispersed in 1.0 M sulfuric acid solution and stirred for 2 hours, followed by filtration and drying, to prepare acid-treated CB.

10 g of the acid-treated CB was introduced and stirred in a mixed solvent containing 1,500 g of distilled water, 1,500 g of ethanol, and 30 g of glycerol, and then 2 g of AgNO₃ was introduced thereto and stirred to prepare a mixed solution. The particle diameter of the CB was 80 nm. By introducing a reducing agent into the mixed solution, Ag ions were reduced and supported on the CB. The CB supported with Ag-containing particles was filtered, washed, and dried to prepare a composite anode active material. It was confirmed by scanning electron microscopy and XPS that a plurality of Ag-containing particles were supported on CB particles. The Ag-containing particles were Ag particles, silver oxide (Ag₂O) particles, and composite particles of Ag and Ag₂O. The content of the Ag-containing particles included in the composite anode active material (CB supported with Ag-containing particles) was 5 wt%. The average particle diameter of the Ag particles was 10 nm.

### Comparative Example 1: Elastic sheet (50 µm)/Cathode layer (112 µm, NCA)/Solid electrolyte layer (30 µm)/Anode layer (37 µm, Alumina composite, Alumina content 40 wt%); (Alumina composite : Ag-C in weight ratio of 3:1)

An all-solid secondary battery was prepared following the same process as in Example 1, except that the composite anode active material prepared in Comparative Preparation Example 1 was used as the first anode active material.

### Comparative Example 2: Elastic sheet (50 µm)/Cathode layer (112 µm, NCA)/Solid electrolyte layer (30 µm)/Anode layer (37 µm, SiO₂+graphene mixture (SiO₂ content 40 wt%) + Ag-C); (Silica mixture:Ag-C in weight ratio of 3:1)

An all-solid secondary battery was prepared following the same process as Example 1, except that instead of the composite anode active material prepared in Preparation Example 1, a mixture containing SiO₂ particles (average particle diameter: about 15 nm) and graphene was used as the first anode active material. The content of SiO₂ particles was 40 wt% of the total weight of the mixture.

### Reference Example 1: Elastic sheet (100 µm)/Cathode layer (112 µm, NCA)/Solid electrolyte layer (30 µm)/Anode layer (17 µm, Ag-C)

An all-solid secondary battery was prepared following the same process as Example 1, except that a second anode active material was used alone as the anode active material, the thickness of the anode active material layer was changed to 7 µm, and the thickness of the elastic sheet was changed to 100 µm. The thickness of the anode layer was the total thickness of the anode current collector and the anode active material layer.

### Example 5: Cathode layer (113.8 µm, Li₂S-LiI-CNF)/Solid electrolyte layer (30 µm)/Anode layer (37 µm, silica composite (silica 40 wt%)+Ag-C); (Silica composite: Ag-C in weight ratio of 3:1)

An all-solid secondary battery was prepared following the same process as Example 1, except that the cathode, described below that contains a sulfide-based cathode active material was used, and the elastic sheet was omitted.

### Preparation of Cathode Layer

As a cathode active material, the Li₂S-LiI-CNF composite prepared in Example 4 was prepared. As a solid electrolyte, argyrodite-type Li₆PS₅Cl crystals (D50=3.0 µm, crystalline) were prepared. PTFE was prepared as a binder. The aforementioned materials were mixed in a weight ratio of composite cathode active material: solid electrolyte : binder = 60 : 40 : 1.2 to prepare a cathode mixture. The cathode mixture was obtained by mixing, using a ball mill.

The cathode mixture was placed on one surface of a cathode current collector made of an aluminum foil carbon-coated on one surface thereof, and was plate-pressed for 10 minutes with a pressure of 200 MPa to produce a cathode. The total thickness of the cathode layer was about 113.8 µm. The thickness of the cathode active material layer was about 93.8 µm, and the thickness of the carbon-coated aluminum foil was about 20 µm.

### Comparative Example 3: Cathode layer (113.8 µm, Li₂S-LiI-CNF)/Solid electrolyte layer (30 µm)/Anode layer (37 µm, SiO₂+graphene mixture (SiO₂ content 40 wt%) + Ag-C); (Silica mixture: Ag-C in weight ratio of 3:1)

An all-solid secondary battery was prepared following the same process as Example 5, except that, instead of the composite anode active material prepared in Preparation Example 1, a mixture containing SiO₂ particles (average particle diameter: about 15 nm) and graphene was used as the first anode active material. The content of SiO₂ particles was 40 wt% of the total weight of the mixture. The same second anode active material used in Example 1 was used.

### Reference Example 2: Elastic sheet (50 µm)/Cathode layer (113.8 µm, Li₂S-LiI-CNF)/Solid electrolyte layer (30 µm)/Anode layer (17 µm, Ag-C)

An all-solid secondary battery was prepared following the same process as Example 1, except that a second anode active material was used alone as the anode active material, the thickness of the anode active material layer was changed to 7 µm, and an elastic sheet having a thickness of 50 µm was used. The thickness of the anode layer was the total thickness of the anode current collector and the anode active material layer.

### Evaluation Example 1: Evaluation of XPS Spectrum

During the process of preparation of the composite anode active material prepared in Preparation Example 1, XPS spectra over time were measured utilizing a Quantum 2000 (Physical Electronics). XPS spectra of C 1s orbital and Si 2p orbital of each sample before temperature elevation, and 1 minute, 5 minutes, 30 minutes, 1 hour, and 4 hours after temperature elevation, were obtained. At the beginning of temperature elevation, the XPS spectrum only shows Si 2p peaks but does not show C 1s peaks. After 30 minutes, C 1s peaks appeared clearly, and the size of Si 2p peaks was significantly reduced.

After 30 minutes, C 1s peaks attributable to C-C bonds and C=C bonds due to growth of graphene appeared clearly around 284.5 eV.

Since the oxidation number of silicon decreases as the reaction time increases, the peak position of the Si 2p orbital was shifted toward a lower binding energy (eV).

In some embodiments, it was found that as the reaction progressed, graphene was grown on the SiO₂ particles, and SiO_{y} (0<y<2), which is a reduction product of SiO₂, was produced.

An average content of carbon and an average content of aluminum were measured from XPS analysis results of 10 regions of a sample of the composite anode active material prepared in Preparation Example 2. From the measurement results, the deviation in silicon content of the respective regions was calculated. The deviation in silicon content was expressed as a percentage with respect to an average value, and this percentage was referred to as uniformity. The percent deviation of the aluminum content from the mean value, that is, uniformity of the aluminum content, was 1%. In some embodiments, it was found that silica was uniformly distributed in the composite anode active material prepared in Preparation Example 1.

### Evaluation Example 2: SEM, HR-TEM and SEM-EDAX Analyses

The composite anode active material prepared in Preparation Example 1 was analyzed by scanning electron microscopy, high-resolution transmission electron microscopy, and EDAX analysis. For SEM-EDAX analysis, a FEI Titan 80-300 of Philips Corporation was utilized.

The composite anode active material prepared in Preparation Example 1 shows a structure in which SiO₂ particles and a reduction product thereof, SiO_{y} (0<y<2) particles, are embedded in graphene. It was found that a graphene layer was on the outside of at least one of SiO₂ particles and SiO_{y} (0<y<2) particles. The at least one particle selected from SiO₂ particles and SiO_{y} (0<y<2) particles were uniformly distributed within the graphene matrix. The at least one particle selected from SiO₂ particles and SiO_{y} (0<y<2) particles was about 15 nm. The average particle diameter of the composite anode active material prepared in Preparation Example 1 was about 200 nm.

### Evaluation Example 3-1: Evaluation of volume change during charging and discharging (NCA Cathode active material)

Once the all-solid secondary batteries prepared in Example 1 and Reference Example 1 each underwent the charging step in the first cycle of the cycling test of Evaluation Example 4, thickness changes were examined by measuring a cross-sectional scanning electron microscopy image of each all-solid secondary battery.

After the first cycle charging, a lithium metal layer was formed between the first anode active material layer and the anode current collector.

In the all-solid secondary battery of Example 1, the thickness of the lithium metal layer, which was formed between the first anode active material layer and the anode current collector after initial charging, was about 10 µm, which is smaller than the thickness (32 µm) of the first anode active material layer after charging.

The increase in the thickness of the all-solid secondary battery of Example 1 after initial charging was 10% or less with respect to the initial thickness of the all-solid secondary battery. Consequently, during the charging and discharging processes of the all-solid secondary battery of Example 1, the volume change was suppressed.

In the all-solid secondary battery of Example 1, a 50 µm-thick elastic member was used to accommodate volume changes during charging and discharging. Consequently, the all-solid secondary battery had a slightly decreased energy density due to including the 50 µm-thick elastic member.

In the all-solid secondary battery of Reference Example 1, the thickness of the lithium metal layer, which was formed between the first anode active material layer and the anode current collector after initial charging, was about 30 µm, which is greater than the thickness (7 µm) of the first anode active material layer after charging.

The increase in the thickness of the all-solid secondary battery of Reference Example 1 after initial charging was more than 15% with respect to the initial thickness of the all-solid secondary battery. Consequently, during the charging and discharging processes of the all-solid secondary battery of Reference Example 1, the volume change was significant.

In the all-solid secondary battery of Reference Example 1, a 100 µm-thick elastic member was used to accommodate volume changes during charging and discharging. Consequently, the all-solid secondary battery had a further decreased energy density due to including the 100 µm-thick elastic member.

### Evaluation Example 3-2: Evaluation of volume change during charging and discharging (Li₂S-LiI-CNF Cathode active material)

Once the all-solid secondary batteries prepared in Example 5 and Reference Example 2 each underwent the charging step in the first cycle of the cycling test of Evaluation Example 4, thickness changes were examined by measuring a cross-sectional scanning electron microscopy image of each all-solid secondary battery.

After the first cycle charging, a lithium metal layer was formed between the first anode active material layer and the anode current collector.

In the all-solid secondary battery of Example 5, the thickness of the lithium metal layer, which was formed between the first anode active material layer and the anode current collector after initial charging, was about 10 µm, which is smaller than the thickness (32 µm) of the first anode active material layer after charging.

The increase in the thickness of the all-solid secondary battery of Example 5 after initial charging was 5% or less with respect to the initial thickness of the all-solid secondary battery. Consequently, during the charging and discharging processes of the all-solid secondary battery of Example 5, the volume change was insignificant.

In the all-solid secondary battery of Example 5, an elastic member for accommodating volume changes during charging and discharging was not used. Consequently, there was no decrease in energy density of the all-solid secondary battery by the elastic member.

In the all-solid secondary battery of Reference Example 2, the thickness of the lithium metal layer, which was formed between the first anode active material layer and the anode current collector after initial charging, was about 30 µm, which is greater than the thickness (7 µm) of the first anode active material layer after charging.

The increase in the thickness of the all-solid secondary battery of Reference Example 2 after initial charging was more than 10 % with respect to the initial thickness of the all-solid secondary battery. Consequently, during the charging and discharging processes of the all-solid secondary battery of Reference Example 2, the volume change was significant.

In the all-solid secondary battery of Reference Example 2, a 50 µm-thick elastic member was used to accommodate an increased volume change during charging and discharging. Consequently, the all-solid secondary battery had a slightly decreased energy density due to including the 50 µm-thick elastic member.

### Evaluation Example 4: Charge/discharge Test

Charge-discharge characteristics of each of the all-solid secondary batteries prepared in Examples 1 to 4, Comparative Examples 1 and 2, and Reference Example 1 were evaluated by the following charge/discharge test. The charge/discharge test was performed with the all-solid secondary battery placed in a constant-temperature bath at 45 °C.

In the first cycle, each battery was charged at a constant current of 0.5 mA/cm² for 12.5 hours until the battery voltage reached a voltage of 3.9 V to 4.25 V. Then, the battery was discharged at a constant current of 0.5 mA/cm² for 12.5 hours until the battery voltage reached 2.5 V.

Charge-discharge characteristics of each of the all-solid secondary batteries prepared in Example 5, Comparative Example 3, and Reference Example 2 were evaluated by the following charge/discharge test. The charge/discharge test was performed with the all-solid secondary battery placed in a constant-temperature bath at 45 °C.

In the first cycle, each battery was charged at a constant current of 0.1 C for 12.5 hours until the battery voltage reached a voltage of 2.5 V to 2.8 V. Then, the battery was discharged at a constant current of 0.1 C for 12.5 hours until the battery voltage reached 0.3 V.

The discharge capacity in the first cycle was used as a standard capacity.

After the second cycle, charging and discharging were performed up to 500 cycles under the same conditions as the first cycle. The results of the measurement are shown in Table 1 below.

The cycle number means the number of cycles required for the discharge capacity to decrease to 80% of the standard capacity after the second cycle. The higher the cycle number, the better lifespan characteristics the battery is considered to have.

**Table 1**

| | Number of cycles [times] |
|---|---|
| Example 1: Elastic sheet (50 µm)/Cathode layer (112 µm, NCA)/Solid electrolyte layer (30 µm)/Anode layer (37 µm, Silica composite (Silica 40 wt%)+Ag-C); (Silica composite: Aq-C in weight ratio of 3:1) | 700 |
| Example 2: Elastic sheet (50 µm)/Cathode layer (112 µm, NCA)/Solid electrolyte layer (30 µm)/Anode layer (37 µm, Silica composite (Silica 60 wt%)+Ag-C); (Silica composite: Aq-C in weight ratio of 3:1) | 510 |
| Example 3: Elastic sheet (50 µm)/Cathode layer (112 µm, NCA)/Solid electrolyte layer (30 µm)/Anode layer (37 µm, Silica composite (Silica 20 wt%)+Ag-C); (Silica composite: Aq-C in weight ratio of 3:1) | 620 |
| Example 4: Elastic sheet (50 µm)/Cathode layer (112 µm, NCA)/Solid electrolyte layer (30 µm)/Anode layer (37 µm, Silica composite (Silica 40 wt%)+Ag-loaded carbon); (Silica composite: Ag-supported carbon in weight ratio of 3:1) | 780 |
| Comparative Example 1: Elastic sheet (50 µm)/Cathode layer (112 µm, NCA)/Solid electrolyte layer (30 µm)/Anode layer (37 µm, Alumina composite, Alumina content 40 wt%+Ag-C); (Alumina composite : Ag-C in weight ratio of 3:1) | 5 |
| Comparative Example 2: Elastic sheet (50 µm)/Cathode layer (112 µm, NCA)/Solid electrolyte layer (30 µm)/Anode layer (37 µm, SiO₂+graphene mixture (SiO₂ content 40 wt%) + Ag-C); (Silica mixture:Ag-Cin weight ratio of 3:1 weight) | 150 |
| Reference Example 1: Elastic sheet (100 µm)/Cathode layer (112 µm, NCA)/Solid electrolyte layer (30 µm)/Anode layer (17 µm, Ag-C) | 400 |
| Example 5: Cathode layer (113.8 µm, Li₂S-LiI-CNF)/Solid electrolyte layer (30 µm)/Anode layer (37 µm, silica composite (silica 40 wt%)+Ag-C); (Silica composite: Ag-C in weight ratio of 3:1) | 600 |
| Comparative Example 3: Cathode layer (113.8 µm, Li₂S-LiI-CNF)/Solid electrolyte layer (30 µm)/Anode layer (37 µm, SiO₂+graphene mixture (SiO₂ content 40 wt%) + Ag-C); (Silica mixture: Ag-C in weight ratio of 3:1) | 100 |
| Reference Example 2: Elastic sheet (50 µm)/Cathode layer (113.8 µm, Li₂S-LiI-CNF)/Solid electrolyte layer (30 µm)/Anode layer (17 µm, Ag-C) | 300 |

As shown in Table 1, the all-solid secondary batteries of Examples 1 to 4 show improved lifespan characteristics compared to the all-solid secondary battery of Reference Example 1, due to suppressed volume changes during charging and discharging, and suppressed agglomeration of metal oxides in the composite anode active materials.

In the all-solid secondary battery of Comparative Example 1, the deterioration in lifespan characteristics was considered to be due to growth of lithium dendrites due to decreased uniformity and/or insufficient electronic conductivity.

The all-solid secondary batteries of Examples 1 to 4 show improved lifespan characteristics compared to the all-solid secondary battery of Comparative Example 2, which contained a simple mixture of the metal oxide and graphene, rather than a composite of the metal oxide and graphene.

In the all-solid secondary battery of Comparative Example 2, the deterioration in lifespan characteristics was considered to be due to irregularities in charging and discharging due to agglomeration of metal oxide nanoparticles and/or agglomeration of graphene.

The all-solid secondary battery of Example 5 showed improved lifespan characteristics than the all-solid secondary battery of Reference Example 2, due to suppressed volume changes during charging and discharging.

The all-solid secondary battery of Example 5 showed improved lifespan characteristics compared to the all-solid secondary battery of Comparative Example 3, which contained a simple mixture of the metal oxide and graphene, rather than a composite of the metal oxide and graphene.

In the all-solid secondary battery of Comparative Example 3, the deterioration in lifespan characteristics was considered to be due to irregularities in charging and discharging due to agglomeration of metal oxide nanoparticles and/or agglomeration of graphene. In the all-solid secondary batteries of Reference Examples 1 and 2, an energy density of the all-solid secondary batteries were decreased due to an addition of thick elastic sheet.

### Evaluation Example 5: Evaluation of High-Rate Capability

High-rate capability of each of the all-solid secondary batteries prepared in Examples 1 to 4, Comparative Examples 1 and 2, and Reference Example 1 was evaluated by the following cycling test. The cycling test was performed while the solid secondary battery was placed in a constant-temperature bath at 45 °C.

The all-solid secondary batteries prepared in Example 5, Comparative Examples 1 and 2, and Reference Example 1 were each charged at a constant current of 0.1 C rate at 45 °C until the battery voltage reached 3.9 V (vs. Li) and then, while maintaining 3.9 V in a constant voltage mode, the charging was cut-off at a current of 0.05 C rate. Subsequently, the battery was discharged at a constant current of 0.1 C rate until the battery voltage reached 2.5 V (vs. Li) during discharge (formation cycle).

The all-solid secondary battery after the formation cycle was charged at 45 °C at a constant current of 0.2 C rate until the battery voltage reached 3.9 V (vs. Li). Subsequently, the battery was discharged at a constant current of 0.2 C rate until the battery voltage reached 2.5 V (vs. Li) during discharge (1st cycle).

The all-solid secondary battery after the 1st cycle was charged at 45 °C at a constant current of 0.2 C rate until the battery voltage reached 3.9 V (vs. Li). Subsequently, the battery was discharged at a constant current of 0.33 C rate until the battery voltage reached 2.5 V (vs. Li) during discharge (2nd cycle).

The all-solid secondary battery after the 2nd cycle was charged at 45 °C at a constant current of 0.2 C rate until the battery voltage reached 3.9 V (vs. Li). Subsequently, the battery was discharged at a constant current of 0.5 C rate until the battery voltage reached 2.5 V (vs. Li) during discharge (3rd cycle).

The all-solid secondary battery after the 3rd cycle was charged at 45 °C at a constant current of 0.2 C rate until the battery voltage reached 3.9 V (vs. Li). Subsequently, the battery was discharged at a constant current of 1.0 C rate until the battery voltage reached 2.5 V (vs. Li) during discharge (4^{th} cycle).

Throughout the charge-discharge cycles above, a rest period of 10 minutes was provided after each charge/discharge cycle. A part of the room-temperature cycling test results is shown in Table 2 below. High-rate capability is defined by Equation 1 below.

The all-solid secondary batteries of Examples 4 to 6, Comparative Example 3, and Reference Example 2 were each evaluated for high-rate capability by the following cycling test. The cycling test was performed while the solid secondary battery was placed in a constant-temperature bath at 45 °C.

The all-solid secondary batteries prepared in Examples 4 to 6, Comparative Example 3, and Reference Example 2 were each charged at a constant current of 0.1 C rate at 45 °C until the battery voltage reached 2.5 V (vs. Li) and then, while maintaining 2.5 V in a constant voltage mode, the charging was cut-off at a current of 0.05 C rate. Subsequently, the battery was discharged at a constant current rate of 0.1 C until the battery voltage reached 0.3 V (vs. Li) during discharge (formation cycle).

The all-solid secondary battery after the formation cycle was charged at 45 °C at a constant current of 0.2 C rate until the battery voltage reached 2.5 V (vs. Li). Subsequently, the battery was discharged at a constant current of 0.2 C rate until the battery voltage reached 0.3 V (vs. Li) during discharge (1st cycle).

The all-solid secondary battery after the 1st cycle was charged at 45 °C at a constant current of 0.2 C rate until the battery voltage reached 2.5 V (vs. Li). Subsequently, the battery was discharged at a constant current of 0.33 C rate until the battery voltage reached 0.3 V (vs. Li) during discharge (2nd cycle).

The lithium battery after the 2nd cycle was charged at 45 °C at a constant current of 0.2 C rate until the battery voltage reached 2.5 V (vs. Li). Subsequently, the battery was discharged at a constant current of 0.5 C rate until the battery voltage reached 0.3 V (vs. Li) during discharge (3rd cycle).

The lithium battery after the 3rd cycle was charged at 45 °C at a constant current of 0.2 C rate until the battery voltage reached 2.5 V (vs. Li). Subsequently, the battery was discharged at a constant current of 1.0 C rate until the battery voltage reached 0.3 V (vs. Li) during discharge (4^{th} cycle).

Throughout the charge-discharge cycles above, a rest period of 10 minutes was provided after each charge/discharge cycle. A part of the room-temperature cycling test results is shown in Table 2 below. High-rate capability is defined by Equation 1 below. High-Rate Capability [%] = [Discharge Capacity in 4th Cycle / Discharge Capacity in Formation Cycle] × 100

**Table 2**

| | High-Rate Capability (1 C/0.1 C) [%] |
|---|---|
| Example 1: Elastic sheet (50 µm)/Cathode layer (112 µm, NCA)/Solid electrolyte layer (30 µm)/Anode layer (37 µm, Silica composite (Silica 40 wt%)+Ag-C); (Silica composite: Ag-C in weight ratio of 3:1) | 94 |
| Example 2: Elastic sheet (50 µm)/Cathode layer (112 µm, NCA)/Solid electrolyte layer (30 µm)/Anode layer (37 µm, Silica composite (Silica 60 wt%)+Ag-C); (Silica composite: Ag-C in weight ratio of 3:1) | 88 |
| Example 3: Elastic sheet (50 µm)/Cathode layer (112 µm, NCA)/Solid electrolyte layer (30 µm)/Anode layer (37 µm, Silica composite (Silica 20 wt%)+Ag-C); (Silica composite: Ag-C in weight ratio of 3:1) | 91 |
| Example 4: Elastic sheet (50 µm)/Cathode layer (112 µm, NCA)/Solid electrolyte layer (30 µm)/Anode layer (37 µm, Silica composite (Silica 40 wt%)+Ag-loaded carbon); (Silica composite: Ag-supported carbon in weight ratio of 3:1) | 94.5 |
| Comparative Example 1: Elastic sheet (50 µm)/Cathode layer (112 µm, NCA)/Solid electrolyte layer (30 µm)/Anode layer | 15 |
| (37 µm, Alumina composite, Alumina content 40 wt%+Ag-C); (Alumina composite : Ag-C in weight ratio of 3:1) | |
| Comparative Example 2: Elastic sheet (50 µm)/Cathode layer (112 µm, NCA)/Solid electrolyte layer (30 µm)/Anode layer (37 µm, SiO₂+graphene mixture (SiO₂ content 40 wt%) + Ag-C); (Silica mixture:Ag-C in weight ratio of 3:1) | 55 |
| Reference Example 1: Elastic sheet (100 µm)/Cathode layer (112 µm, NCA)/Solid electrolyte layer (30 µm)/Anode layer (17 µm, Ag-C) | 90 |
| Example 5: Cathode layer (113.8 µm, Li₂S-LiI-CNF)/Solid electrolyte layer (30 µm)/Anode layer (37 µm, silica composite (silica 40 wt%)+Ag-C); (Silica composite: Ag-C in weight ratio of 3:1) | 88 |
| Comparative Example 3: Cathode layer (113.8 µm, Li₂S-LiI-CNF)/Solid electrolyte layer (30 µm)/Anode layer (37 µm, SiO₂+graphene mixture (SiO₂ content 40 wt%) + Ag-C); (Silica mixture: Ag-C in weight ratio of 3:1) | 45 |
| Reference Example 2: Elastic sheet (50 µm)/Cathode layer (113.8 µm, Li₂S-LiI-CNF)/Solid electrolyte layer (30 µm)/Anode layer (17 µm, Ag-C) | 80 |

As shown in Table 2, the all-solid secondary batteries of Examples 1 to 4 showed improved high-rate capability in comparison to the all-solid secondary batteries of Comparative Examples 1 and 2.

It was considered that this result is due to the fact that because the all-solid secondary batteries of Examples 1 to 4 include a composite anode active material, the composite anode active material includes a graphene matrix, and the graphene matrix has flexibility, volume changes of the first anode active material layer due to plating and/or dissolution of lithium during charging and discharging were more easily accommodated. It was considered that improved uniformity of electrode reactions in the all-solid secondary batteries of Examples 1 to 4, by virtue of uniform distribution of the metal oxides in the anode active material layers, contributed to the same result.

It was considered that in the all-solid secondary batteries of Examples 1 to 4, the high-rate capability of the all-solid secondary battery was further improved because as the all-solid secondary battery contained both the composite anode active material (first anode active material) and the second anode active material, the dispersion of the second anode active material in the first anode active material layer was further improved by the composite anode active material.

The all-solid secondary battery of Example 5 showed improved high-rate capability, compared to the all-solid secondary battery of Comparative Example 3.

It was considered that this result is due to the fact that because the all-solid secondary battery of Example 5 includes a composite anode active material, the composite anode active material includes a graphene matrix, and the graphene matrix has flexibility, volume changes of the first anode active material layer due to plating and/or dissolution of lithium during charging and discharging were more easily accommodated. It was considered that improved uniformity of electrode reactions in the all-solid secondary battery of Example 5, by virtue of uniform distribution of the metal oxide in the anode active material layer, contributed to the same result.

It was considered that in the all-solid secondary battery of Example 5, the high-rate capability of the all-solid secondary battery was further improved because as the all-solid secondary battery contained both the composite anode active material (first anode active material) and the second anode active material, the dispersion of the second anode active material in the first anode active material layer was further improved by the composite anode active material. In the all-solid secondary batteries of Reference Examples 1 and 2, an energy density of the all-solid secondary batteries were decreased due to an addition of thick elastic sheet.

According to one aspect, an all-solid secondary battery, that has reduced volume changes during charging and discharging and improved cycling performance by including a composite anode active material, may be provided.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the present disclosure as defined by the following claims, and equivalents thereof.

Embodiments are set out in the following clauses:
Clause 1. An all-solid secondary battery comprising:
   a cathode layer;
   an anode layer; and
   a solid electrolyte layer between the cathode layer and the anode layer,
   wherein the cathode layer comprises a cathode current collector and a cathode active material layer on one surface of the cathode current collector, and
   the anode layer comprises an anode current collector and a first anode active material layer on one surface of the anode current collector,
   wherein the first anode active material layer comprises a first anode active material and a second anode active material,
   the first anode active material includes a first composite anode active material, the first composite anode active material comprising: a first metal oxide represented by MₐO_{b} (0<a≤3 and 0<b<4, wherein if a is 1, 2, or 3, b is not an integer); and a carbon-based material,
   wherein the first metal oxide is disposed within a matrix of the carbon-based material, and M is one or more metals selected from Groups 2 to 12 and Groups 14 to 16 of the Periodic Table of the Elements.
Clause 2. The all-solid secondary battery of clause 1, wherein the first metal oxide comprises a metal, wherein the metal is one or more selected from Si, Nb, Mg, Sc, Ti, Zr, V, W, Mn, Fe, Co, Pd, Cu, Ag, Zn, Sb, and Se.
Clause 3. The all-solid secondary battery of clause 1 or clause 2, wherein the first metal oxide is one or more selected from SiO_{y} (0<y<2), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), Co₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2).
Clause 4. The all-solid secondary battery of clauses 1 to 3, wherein the first composite anode active material further comprises a second metal oxide represented by MₐO_{c} (0<a≤3 and 0<c≤4, wherein if a is 1, 2, or 3, c is an interger),
   the second metal oxide comprises the same metal as the first metal oxide, and
   c/a, a ratio of c to a, in the second metal oxide has a larger value than b/a, a ratio of b to a, in the first metal oxide.
Clause 5. The all-solid secondary battery of clauses 1 to 4, wherein the second metal oxide is one or more selected from SiO₂, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂.
Clause 6. The all-solid secondary battery of clauses 1 to 5, wherein the first metal oxide is a product of reduction of the second metal oxide.
Clause 7. The all-solid secondary battery of clauses 1 to 6, wherein at least one selected from the first metal oxide and the second metal oxide has an average particle diameter of about 1 nm to about 1 µm.
Clause 8. The all-solid secondary battery of clauses 1 to 7, wherein a content of at least one of the first metal oxide and the second metal oxide is about 10 wt% to about 90 wt% with respect to a total weight of the first composite anode active material.
Clause 9. The all-solid secondary battery of clauses 1 to 8, wherein the carbon-based material comprises a carbon-based nanostructure,
   wherein the carbon-based nanostructure comprises a two-dimensional carbon-based nanostructure,
   wherein the two-dimensional carbon-based nanostructure comprises graphene.
Clause 10. The all-solid secondary battery of clauses 1 to 9, wherein the carbon-based material has a branched structure, and the first metal oxide is distributed within the branched structure,
   wherein the branched structure comprises a plurality of graphene particles in contact with one another.
Clause 11. The all-solid secondary battery of clauses 1 to 10, wherein the first anode active material and the second anode active material have a particulate form, and an average particle diameter of each of the first anode active material and the second anode active material is 4 µm or less.
Clause 12. The all-solid secondary battery of clauses 1 to 11, wherein the second anode active material comprises at least one of a carbon-based anode active material and a metal-based anode active material,
   wherein the carbon-based anode active material comprises amorphous carbon, crystalline carbon, porous carbon, or a combination thereof, and
   the metal-based anode active material comprises gold (Au), platinum (Pt), palladium (Pd), silicon (Si), silver (Ag), bismuth (Bi), tin (Sn), zinc (Zn), or a combination thereof,
   the second anode active material comprises a mixture of first particles and second particles, the first particles consisting of amorphous carbon, and the second particles consisting of a metal or a metalloid,
   wherein a content of the second particles is about 1 wt% to about 60 wt% with respect to a total weight of the mixture.
Clause 13. The all-solid secondary battery of clauses 1 to 12, wherein the second anode active material comprises a second composite anode active material,
   wherein the second composite anode active material comprises a carbon-based support and a metal-based anode active material supported on the carbon-based support,
   wherein the metal-based anode active material comprises a metal, a metal oxide, a composite of a metal and a metal oxide, or a combination thereof,
   the metal-based anode active material has a particulate form, and a particle diameter of the metal-based anode active material is about 1 nm to about 200 nm, and
   the carbon-based support has a particulate form, and a particle diameter of the carbon-based material is about 10 nm to about 2 µm.
Clause 14. The all-solid secondary battery of clauses 1 to 13, wherein the first anode active material layer further comprises a binder, the binder comprises a fluorinated binder, and an initial charge capacity of the first anode active material layer is less than an initial charge capacity of the cathode active material layer,
   the all-solid secondary battery further comprises a second anode active material layer disposed at least one of: between the anode current collector and the first anode active material layer; and between the anode current collector and the solid electrolyte layer,
   wherein the second anode active material layer is a metal layer, and the metal layer comprises lithium or a lithium alloy, and
   a thickness of the second anode active material layer is less than a thickness of the first anode active material layer.
Clause 15. The all-solid secondary battery of clauses 1 to 14, wherein the cathode active material layer comprises a cathode active material,
   wherein the cathode active material comprises a sulfide-based cathode active material, an oxide-based cathode active material, or a combination thereof,
   wherein the sulfide-based cathode active material comprises nickel sulfide, copper sulfide, Li₂S, a Li₂S-containing composite, or a combination thereof, and
   the oxide-based cathode active material comprises a lithium transition metal oxide, a metal oxide, or a combination thereof, wherein the lithium transition metal oxide comprises a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof, and the metal oxide comprises an iron oxide, a vanadium oxide, or a combination thereof.
Clause 16. The all-solid secondary battery of clauses 1 to 15, wherein the cathode active material layer further comprises one or more selected from a solid electrolyte, a conductive material, and a binder,
   wherein the solid electrolyte comprises a sulfide-based solid electrolyte, and the conductive material comprises a carbon-based conductive material.
Clause 17. The all-solid secondary battery of clauses 1 to 16, wherein the solid electrolyte layer comprises a solid electrolyte or a combination of a solid electrolyte and a gel electrolyte, and
   he solid electrolyte comprises a sulfide-based solid electrolyte, an oxide-based solid electrolyte, a polymer solid electrolyte, or a combination thereof,
   wherein the gel electrolyte comprises a polymer gel electrolyte.
Clause 18. The all-solid secondary battery of clauses 1 to 17, wherein the sulfide-based solid electrolyte is at least one selected from Li₂S-P₂S₅ and Li₂S-P₂S₅-LiX, wherein X is a halogen element; Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z is Ge, Zn or Ga; Li₂S-GeS₂, Li₂S-SiS₂-Li₃PO₄, and Li₂S-SiS₂-LiₚMO_{q}, wherein p and q each are a positive number and M is P, Si, Ge, B, Al, Ga or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2, and
   the sulfide-based solid electrolyte comprises an argyrodite-type solid electrolyte,
   wherein the argyrodite-type solid electrolyte comprises one or more selected from Li₆PS₅Cl, Li₆PS₅Br, and LisPSsl, and
   the argyrodite-type solid electrolyte has a density of about 1.5 g/cc to about 2.0 g/cc.
Clause 19. The all-solid secondary battery of clauses 1 to 18, wherein at least one of the cathode current collector and the anode current collector comprises a base film and a metal layer disposed on one surface or opposite surfaces of the base film,
   wherein the base film comprises a polymer, the polymer comprising polyethylene terephthalate (PET), polyethylene (PE), polypropylene (PP), polybutylene terephthalate (PBT), polyimide (PI), or a combination thereof, and
   the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
Clause 20. The all-solid secondary battery of clauses 1 to 19, further comprising a first inactive member disposed on at least one of the opposite surface to the one surface of the cathode current collector and the opposite surface to the one surface of the anode current collector,
   wherein the first inactive member is an elastic member.

## Claims

1. An all-solid secondary battery (1) comprising:
a cathode layer (10);
an anode layer (20); and
a solid electrolyte layer (30) between the cathode layer (10) and the anode layer (20),
wherein the cathode layer (10) comprises a cathode current collector (11) and a cathode active material layer (12) on one surface of the cathode current collector (11), and
the anode layer (20) comprises an anode current collector (21) and a first anode active material layer (22) on one surface of the anode current collector (21),
wherein the first anode active material layer (22) comprises a first anode active material and a second anode active material,
the first anode active material includes a first composite anode active material, the first composite anode active material comprising: a first metal oxide represented by MₐO_{b} (0<a≤3 and 0<b<4, wherein if a is 1, 2, or 3, b is not an integer); and a carbon-based material,
wherein the first metal oxide is within a matrix of the carbon-based material, and M is one or more metals selected from Groups 2 to 12 and Groups 14 to 16 of the Periodic Table of the Elements.

2. The all-solid secondary battery (1) as claimed in claim 1, wherein the first metal oxide comprises a metal, wherein the metal is one or more selected from Si, Nb, Mg, Sc, Ti, Zr, V, W, Mn, Fe, Co, Pd, Cu, Ag, Zn, Sb, and Se, wherein preferably the first metal oxide is one or more selected from SiO_{y} (0<y<2), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), Co₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2).

3. The all-solid secondary battery (1) as claimed in claim 1 or 2, wherein the first composite anode active material further comprises a second metal oxide represented by MₐO_{c} (0<a≤3 and 0<c≤4, wherein if a is 1, 2, or 3, c is an integer),
the second metal oxide comprises the same metal as the first metal oxide, and
c/a, a ratio of c to a, in the second metal oxide has a larger value than b/a, a ratio of b to a, in the first metal oxide, and/or wherein the first composite anode active material further comprises a second metal oxide is one or more selected from SiO₂, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂.

4. The all-solid secondary battery (1) as claimed in any one of the preceding claims 1 to 3, wherein the first metal oxide is a product of reduction of the second metal oxide.

5. The all-solid secondary battery (1) as claimed in any one of the preceding claims 1 to 4, wherein at least one selected from the first metal oxide and the second metal oxide has an average particle diameter of 1 nm to 1 µm.

6. The all-solid secondary battery (1) as claimed in any one of the preceding claims 1 to 5, wherein a content of at least one of the first metal oxide and the second metal oxide is 10 wt% to 90 wt% with respect to a total weight of the first composite anode active material.

7. The all-solid secondary battery (1) as claimed in any one of the preceding claims 1 to 6, wherein the carbon-based material comprises a carbon-based nanostructure,
wherein the carbon-based nanostructure comprises a two-dimensional carbon-based nanostructure, and
wherein the two-dimensional carbon-based nanostructure comprises graphene, and/or wherein the carbon-based material has a branched structure, and the first metal oxide is distributed within the branched structure, and
wherein the branched structure comprises a plurality of graphene particles in contact with one another.

8. The all-solid secondary battery (1) as claimed in any one of the preceding claims 1 to 7, wherein the first anode active material and the second anode active material have a particulate form, and an average particle diameter of each of the first anode active material and the second anode active material is 4 µm or less.

9. The all-solid secondary battery (1) as claimed in any one of the preceding claims 1 to 8, wherein the second anode active material comprises at least one selected from a carbon-based anode active material and a metal-based anode active material,
wherein the carbon-based anode active material comprises amorphous carbon, crystalline carbon, porous carbon, or a combination thereof, and
the metal-based anode active material comprises gold (Au), platinum (Pt), palladium (Pd), silicon (Si), silver (Ag), bismuth (Bi), tin (Sn), zinc (Zn), or a combination thereof,
the second anode active material comprises a mixture of first particles and second particles, the first particles consisting of amorphous carbon, and the second particles consisting of a metal and/or a metalloid,
wherein a content of the second particles is 1 wt% to 60 wt% with respect to a total weight of the mixture, and/or wherein the second anode active material comprises a second composite anode active material,
wherein the second composite anode active material comprises a carbon-based support and a metal-based anode active material supported on the carbon-based support,
wherein the metal-based anode active material comprises a metal, a metal oxide, a composite of a metal and a metal oxide, or a combination thereof,
the metal-based anode active material has a particulate form, and a particle diameter of the metal-based anode active material is 1 nm to 200 nm, and
the carbon-based support has a particulate form, and a particle diameter of the carbon-based material is 10 nm to 2 µm.

10. The all-solid secondary battery (1) as claimed in any one of the preceding claims 1 to 9, wherein the first anode active material layer (22) further comprises a binder, the binder comprises a fluorinated binder, and an initial charge capacity of the first anode active material layer (22) is less than an initial charge capacity of the cathode active material layer (12),
the all-solid secondary battery (1) further comprises a second anode active material layer (24), and the second anode active layer is provided: between the anode current collector (21) and the first anode active material layer (22); and/or between the anode current collector (21) and the solid electrolyte layer (30),
wherein the second anode active material layer (24) is a metal layer, and the metal layer comprises lithium and/or a lithium alloy, and
a thickness of the second anode active material layer (24) is less than a thickness of the first anode active material layer (22).

11. The all-solid secondary battery (1) as claimed in any one of the preceding claims 1 to 10, wherein the cathode active material layer (12) comprises a cathode active material,
wherein the cathode active material comprises a sulfide-based cathode active material, an oxide-based cathode active material, or a combination thereof,
wherein the sulfide-based cathode active material comprises nickel sulfide, copper sulfide, Li₂S, a Li₂S-containing composite, or a combination thereof, and
the oxide-based cathode active material comprises a lithium transition metal oxide, a metal oxide, or a combination thereof, wherein the lithium transition metal oxide comprises a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof, and the metal oxide comprises an iron oxide, a vanadium oxide, or a combination thereof, and/or wherein the cathode active material layer (12) further comprises one or more selected from a solid electrolyte, a conductive material, and a binder,
wherein the solid electrolyte comprises a sulfide-based solid electrolyte, and the conductive material comprises a carbon-based conductive material.

12. The all-solid secondary battery (1) as claimed in any one of the preceding claims 1 to 11, wherein the solid electrolyte layer (30) comprises a solid electrolyte or a combination of a solid electrolyte and a gel electrolyte, and
the solid electrolyte comprises a sulfide-based solid electrolyte, an oxide-based solid electrolyte, a polymer solid electrolyte, or a combination thereof, and
wherein the gel electrolyte comprises a polymer gel electrolyte.

13. The all-solid secondary battery (1) as claimed in any one of the preceding claims 1 to 12, wherein the sulfide-based solid electrolyte is at least one selected from Li₂S-P₂S₅ and Li₂S-P₂S₅-LiX, wherein X is a halogen element; Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z is Ge, Zn or Ga; Li₂S-GeS₂, Li₂S-SiS₂-Li₃PO₄, and Li₂S-SiS₂-LiₚMO_{q}, wherein p and q each are a positive number and M is P, Si, Ge, B, Al, Ga or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2, and
the sulfide-based solid electrolyte comprises an argyrodite-type solid electrolyte,
wherein the argyrodite-type solid electrolyte comprises one or more selected from Li₆PS₅Cl, Li₆PS₅Br, and LisPSsl, and
the argyrodite-type solid electrolyte has a density of 1.5 g/cc to 2.0 g/cc.

14. The all-solid secondary battery (1) as claimed in any one of the preceding claims 1 to 13, wherein at least one selected from the cathode current collector (11) and the anode current collector (21) comprises a base film and a metal layer on one surface or opposite surfaces of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof.

15. The all-solid secondary battery (1) as claimed in any one of the preceding claims 1 to 14, further comprising a first inactive member (40, 40a, 40b) on at least one of the opposite surface to the one surface of the cathode current collector (11) and the opposite surface to the one surface of the anode current collector (21),
wherein the first inactive member (40, 40a, 40b) is an elastic member.
